# EUROPEAN PATENT APPLICATION

(11) **EP 4 715 866 A1**
(43) Date of publication of application: **25.03.2026**
(21) Application number: 24807263.9
(22) Date of filing: 16.05.2024
(51) Int. Cl.: H01K 1/06, G01N 21/01, G01N 21/3577

(54) **NANOCARBON LIGHT SOURCE ELEMENT, INFRARED ANALYSIS APPARATUS, IMAGING APPARATUS, WEARABLE DEVICE, AND DEVICE**

(30) Priority: 17.05.2023 JP 2023081417
(71) Applicant: Keio University, Tokyo, 108-8345 (JP)
(72) Inventor: MAKI, Hideyuki, Yokohama-shi, Kanagawa 223-8522 (JP)
(74) Representative: Epping - Hermann - Fischer
(86) International application number: PCT/JP2024/018168
(87) International publication number: WO 2024/237313

(57) **Abstract**

A nanocarbon light source element includes a substrate, a nanocarbon light source disposed on the substrate, and a wavelength selecting structure that is provided to the nanocarbon light source and selects specific wavelengths, wherein the nanocarbon light source element emits light having the specific wavelengths via the wavelength selecting structure. A multiwavelength nanocarbon light source array includes nanocarbon light sources arranged into an array on a substrate and a wavelength selecting structure provided to each of the nanocarbon light sources, and selects different wavelengths, wherein the multiwavelength nanocarbon light source array emits light having multiple wavelengths via the wavelength selecting structure.

## Description

### TECHNICAL FIELD

The present invention relates to a spectroscopic analysis using a nanocarbon light source, and particularly relates to a nanocarbon light source element selectively outputting specific wavelengths, an infrared analysis apparatus, an imaging apparatus, a wearable device, and a device.

### BACKGROUND OF THE INVENTION

A light source using graphene (see, for example, Patent Document 1) and a light emitting element using a nanocarbon tube (see, for example, Patent Document 2) are known. An infrared analysis and infrared imaging technology using a light source formed of a nanocarbon material has been proposed (see, for example, Patent Document 3).

### RELATED-ART DOCUMENT

### Patent Documents

Patent Document 1: Japanese Patent No. 6155012
Patent Document 2: Japanese Patent No. 5747334
Patent Document 3: International Patent Publication No. WO 2019/176705

### SUMMARY OF THE INVENTION

### PROBLEMS TO BE SOLVED BY THE INVENTION

The infrared analysis technology of the related art requires a spectroscopic device using a Michelson interferometer or diffraction grating, which is a large device of about several tens of centimeters square and is difficult to downsize. Therefore, an infrared analysis has not been widely applied in general practice. An analysis chip is an analysis chip that analyzes a minute amount of a sample used in combination with a microflow path or the like, but separately requires a large-size spectroscopic device using a Michelson interferometer or diffraction grating. As an imaging device of infrared or the like, there is a microscopic spectrometer. Also in this case, a spectroscopic device for spectroscopy is arranged at an anterior or posterior position of a sample, which results in an infrared imaging device with a large-size spectrometer.

The present invention provides a nanocarbon light source element that can emit specific wavelengths using a nanocarbon material, and provides an infrared analysis apparatus, an imaging apparatus, a wearable device, and a device, which use the nanocarbon light source element.

### MEANS FOR SOLVING THE PROBLEMS

A nanocarbon light source element includes a nanocarbon light source disposed on a substrate, and a wavelength-selecting structure that is provided to the nanocarbon light source and selects specific wavelengths, wherein the nanocarbon light source element emits light having the specific wavelengths via the wavelength-selecting structure.

### EFFECTS OF THE INVENTION

A nanocarbon light source capable of emitting specific wavelengths is realized. By using the nanocarbon light source, a novel infrared analysis apparatus, imaging apparatus, wearable device, and device, which can perform spectroscopy with one detector is realized without using a spectrometer using a Michelson interferometer or diffraction grating, which is generally required for an infrared analysis.

### BRIEF DESCRIPTION OF THE DRAWINGS

[Fig. 1] Fig. 1 is a schematic view of a multiwavelength nanocarbon light source array of a first embodiment.
[Fig. 2] Fig. 2 is a view illustrating a state in which the multiwavelength nanocarbon light source array of the first embodiment emits light.
[Fig. 3] Fig. 3 is a view illustrating an example of a resonator structure of a nanocarbon light source element in the multiwavelength nanocarbon light source array of the first embodiment.
[Fig. 4] Fig. 4 is a view illustrating an example of the resonator structure of the nanocarbon light source element in the multiwavelength nanocarbon light source array of the first embodiment.
[Fig. 5] Fig. 5 is a view illustrating an example of the resonator structure of the nanocarbon light source element in the multiwavelength nanocarbon light source array of the first embodiment.
[Fig. 6] Fig. 6 is a view illustrating a configuration example of a resonator realizing multiwavelength with the nanocarbon light source elements in the multiwavelength nanocarbon light source array of the first embodiment.
[Fig. 7] Fig. 7 is a view illustrating a configuration example of the resonator realizing multiwavelength with the nanocarbon light source elements in the multiwavelength nanocarbon light source array of the first embodiment.
[Fig. 8] Fig. 8 is a schematic view of a configuration example of an analysis chip using the multiwavelength nanocarbon light source array of the first embodiment.
[Fig. 9] Fig. 9 is a schematic view of a configuration example of the analysis chip using the multiwavelength nanocarbon light source array of the first embodiment.
[Fig. 10] Fig. 10 is a schematic view of a configuration example of the analysis chip using the multiwavelength nanocarbon light source array of the first embodiment.
[Fig. 11] Fig. 11 is a schematic view of a configuration example of the analysis chip using the multiwavelength nanocarbon light source array of the first embodiment.
[Fig. 12] Fig. 12 is a schematic view of a modification example of the multiwavelength nanocarbon light source array of the first embodiment.
[Fig. 13] Fig. 13 is a schematic view of an analysis chip using the modification example of the multiwavelength nanocarbon light source array of the first embodiment.
[Fig. 14] Fig. 14 is a schematic view of another analysis chip using the modification example of the multiwavelength nanocarbon light source array of the first embodiment.
[Fig. 15] Fig. 15 is a schematic view of an infrared analysis chip using a nanocarbon light source array of a second embodiment.
[Fig. 16] Fig. 16 is a schematic view of the infrared analysis chip using the nanocarbon light source array of the second embodiment.
[Fig. 17] Fig. 17 is a schematic view of a first example of a spectroscopic device of a third embodiment.
[Fig. 18] Fig. 18 is a schematic view of a second example of the spectroscopic device of the third embodiment.
[Fig. 19] Fig. 19 is a schematic view of a third example of the spectroscopic device of the third embodiment.
[Fig. 20] Fig. 20 is a schematic view of a fourth example of the spectroscopic device of the third embodiment.
[Fig. 21] Fig. 21 is a schematic view of a fifth example of the spectroscopic device of the third embodiment.
[Fig. 22] Fig. 22 is a schematic view of a sixth example of the spectroscopic device of the third embodiment.
[Fig. 23] Fig. 23 is a schematic view of a seventh example of the spectroscopic device of the third embodiment.
[Fig. 24] Fig. 24 is a schematic view of an eighth example of the spectroscopic device of the third embodiment.
[Fig. 25] Fig. 25 is a schematic view of a first example of an analysis device of a fourth embodiment.
[Fig. 26] Fig. 26 is a schematic view of a second example of the analysis device of the fourth embodiment.
[Fig. 27] Fig. 27 is a schematic view of a third example of the analysis device of the fourth embodiment.
[Fig. 28] Fig. 28 is a schematic view of a fourth example of the analysis device of the fourth embodiment.
[Fig. 29] Fig. 29 is a schematic view of a fifth example of the analysis device of the fourth embodiment.
[Fig. 30] Fig. 30 is a schematic view of a sixth example of the analysis device of the fourth embodiment.
[Fig. 31] Fig. 31 is schematic view of a seventh example of the analysis example of the fourth embodiment.
[Fig. 32] Fig. 32 is a schematic view of an eighth example of the analysis device of the fourth embodiment.
[Fig. 33] Fig. 33 is a schematic view of an infrared analysis apparatus of a fifth embodiment.
[Fig. 34] Fig. 34 is a schematic view illustrating a first example of a light extraction mechanism in the infrared analysis apparatus of the fifth embodiment.
[Fig. 35] Fig. 35 is a schematic view illustrating a second example of the light extraction mechanism in the infrared analysis apparatus of the fifth embodiment.
[Fig. 36] Fig. 36 is a schematic view illustrating a third example of the light extraction mechanism in the infrared analysis apparatus of the fifth embodiment.
[Fig. 37] Fig. 37 is a schematic view illustrating a fourth example of the light extraction mechanism in the infrared analysis apparatus of the fifth embodiment.
[Fig. 38] Fig. 38 is a schematic view illustrating a fifth example of the light extraction mechanism in the infrared analysis apparatus of the fifth embodiment.
[Fig. 39] Fig. 39 is a view for explaining a nanocarbon light source of the present embodiment.
[Fig. 40] Fig. 40 is a diagram for explaining a reflection spectrum of reflection light from an evanescent field generated by infrared light of the nanocarbon light source of the present embodiment.
[Fig. 41] Fig. 41 is a diagram for explaining an emission spectrum of light of the nanocarbon light source of the present embodiment passed through a substrate.
[Fig. 42] Fig. 42 is a diagram for explaining the result of measuring the photoresist polymer using the nanocarbon light source of the present embodiment.
[Fig. 43] Fig. 43 is a diagram for explaining the result of measuring glucose using the nanocarbon light source of the present embodiment.
[Fig. 44] Fig. 44 is a diagram illustrating the result of comparing an infrared spectrum obtained using the nanocarbon light source of the present embodiment and an infrared spectrum obtained by Fourier transform infrared spectroscopy.
[Fig. 45] Fig. 45 is a diagram illustrating a calibration curve of a glucose concentration relative to a peak intensity of an infrared spectrum obtained using the nanocarbon light source of the present embodiment.
[Fig. 46] Fig. 46 is a diagram illustrating the result of the glucose measurement using the nanocarbon light source of the present embodiment.
[Fig. 47] Fig. 47 is a view for explaining a meander structure in the nanocarbon light source of the present embodiment.
[Fig. 48] Fig. 48 is a view for explaining the nanocarbon light source of the present embodiment that has the meander structure.
[Fig. 49] Fig. 49 is a view for explaining the result of light emission of the nanocarbon light source of the present embodiment that includes the meander structure.
[Fig. 50] Fig. 50 is a view for explaining a stripe structure in the nanocarbon light source of the present embodiment.
[Fig. 51] Fig. 51 is a view for explaining the nanocarbon light source of the present embodiment that has the strip structure.
[Fig. 52] Fig. 52 is a view for explaining the result of light emission of the nanocarbon light source of the present embodiment that has the strip structure.
[Fig. 53] Fig. 53 is a view for explaining an example of a device using the nanocarbon light source of the present embodiment.
[Fig. 54] Fig. 54 is a view for explaining an example of the device using the nanocarbon light source of the present embodiment.
[Fig. 55] Fig. 55 is a view for explaining an example of the device using the nanocarbon light source of the present embodiment.
[Fig. 56] Fig. 56 is a view for explaining an example of the device using the nanocarbon light source of the present embodiment.
[Fig. 57] Fig. 57 is a view for explaining an example of the device using the nanocarbon light source of the present embodiment.
[Fig. 58] Fig. 58 is a view for explaining an example of the device using the nanocarbon light source of the present embodiment.
[Fig. 59] Fig. 59 is a view for explaining an example of the device using the nanocarbon light source of the present embodiment.

### DETAILED DESCRIPTION OF THE INVENTION

The nanocarbon light source element of the present invention and the infrared analysis apparatus using the nanocarbon light source will be described in detail with reference to drawings hereinafter. The following embodiments are examples for embodying the technical concept of the invention, and the present invention is not limited to the described configurations and numerical values. In the drawings, the same reference numeral is given to constituent components having the same function, and redundant descriptions may be omitted. Partial replacement or combination between different embodiments and configuration examples is possible. The sizes, positional relationships, or the like of the members illustrated in the drawings may be exaggerated to facilitate understanding of the invention.

### <First embodiment>

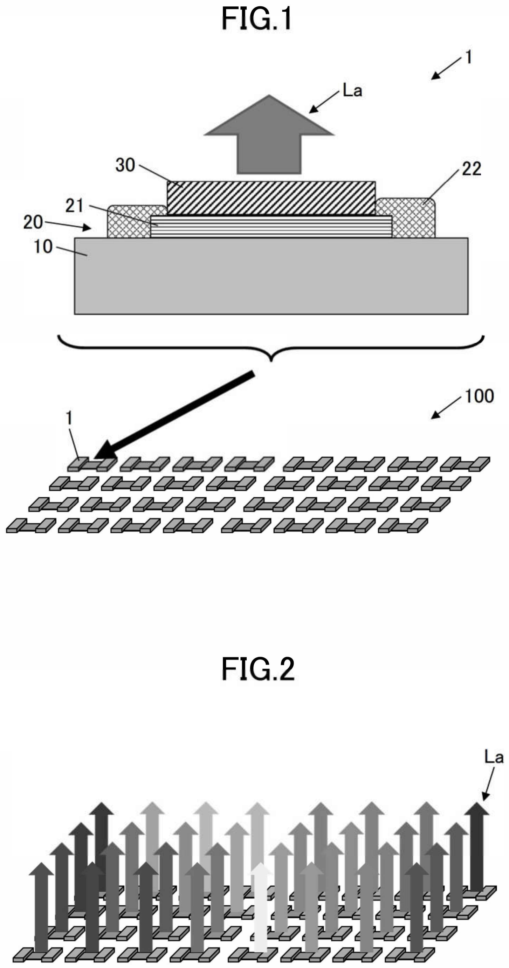

The nanocarbon light source element of the first embodiment and the infrared analysis apparatus using the nanocarbon light source element will be described with reference to Figs. 1 to 14. An infrared light source using a graphene or carbon nanotube can be formed as a minute light source on a plane due to thermal radiation by arranging a nanocarbon material on a planar substrate or the like and passing the electricity through to heat the nanocarbon material, and the infrared light sources can be integrated on a chip. Wavelengths of light emitted from the minute light source are wavelengths ranging from the visible region to the mid-infrared region. By forming a specific wavelength selection filter or a wavelength filter using a resonator for each of the minute light sources, a light source that emits specific wavelengths is obtained. By integrating the minute light sources arranged in a one-dimensional, two-dimensional, or three-dimensional array, and varying transmission wavelengths of the filter or resonator to vary the emission wavelengths of each of the minute light sources, light of various wavelengths is selectively outputted (see, Figs. 1 and 2). Thus, a novel spectroscopic chip or spectroscopic device capable of performing spectroscopy with only one detector is obtained without using a spectrometer using a Michelson interferometer or diffraction grating.

A multiwavelength nanocarbon light source array 100 is formed by integrating a plurality of nanocarbon light source elements 1 in a two-dimensional array on a substrate 10. In the present disclosure, the arrangement of the multiwavelength nanocarbon light source array is not limited to a two-dimensional arrangement, and may be, for example, a one-dimensional arrangement or a three-dimensional arrangement. The nanocarbon light source element 1 includes, on a substrate 10, a nanocarbon light source 20 and a wavelength selecting structure 30. Since the wavelengths are selected from the light, which is emitted by the nanocarbon light source 20, by the wavelength selecting structure 30, the nanocarbon light source element 1 outputs light La having specific wavelengths. The nanocarbon light source element 1 may have, for example, a chip-like shape. Specifically, the nanocarbon light source element 1 may be a nanocarbon light source chip.

The nanocarbon light source 20 includes a light-emitting layer 21 and electrodes 22 for supplying power to the light-emitting layer 21. The light-emitting layer 21 is formed of a nanocarbon material. The electricity is passed through the light-emitting layer 21 via the electrodes 22 to heat the light-emitting layer 21, thereby emitting light having wavelengths ranging from the visible region to the mid-infrared region. As the wavelengths, the shortest wavelengths can be 800 nm or longer, but the shortest wavelengths can be typically wavelengths of 1 µm or longer, and preferably wavelengths of 2 µm or longer in the mid-infrared region. The longest wavelengths can be wavelengths of 50 µm or shorter, but the longest wavelengths can be 30 µm or shorter. The longest wavelengths may be sometimes used by limiting to 20 µm or shorter.

At the time of light emission, a DC voltage or current can be applied to emit light, but high-speed modulated light emission, in which emitted light is blinked or intensity of the like is modulated, can be performed by applying a modulated voltage or current, such as a rectangular wave, a sine wave, or the like. The frequency for modulation may be any frequency, as long as the frequency is 10 Hz or greater. Considering an actual application, the frequency is often used at 50 Hz or greater or 100 Hz or greater. Moreover, the maximum value of the frequency can be modulated at 1 GHz or less. Typically, high-speed modulation at 1 MHz or less is often used, and in some cases, the maximum value of the frequency is used at 100 kHz or less, or at 10 kHz or less.

In the below-described light detection or analysis using modulated light emission, the light detection or infrared analysis with high sensitivity using a lock-in amplifier or a gate synchronization technique can be performed by synchronizing with the modulated light emission.

Further, only light generated from the nanocarbon light source itself can be selectively received with a detector by performing the light detection to detect only a signal synchronized with modulated light emission, which utilizes not only a simple improvement in sensitivity of an electric-circut measurement through synchronization with light emission, but also the fact that temperatures of the substrate or a measurement target present in the srrounding environment of the nanocarbon light source does not change at high speed. Therefore, the background radiation of infrared light from the substrate or the measurement target can be removed, and only light from the nanocarbon light source can be selectively received. Thus, the detection or analysis using only the light emitted from the nanocarbon light source can be performed, which realizes an infrared analysis at ultra-high sensitivity. The above-described technique of increasing the sensitivity is a high sensitization method that is commonly applied to all measurement methods using the nanocarbon light source.

In the case where a nano material of 1 nm-order, such as carbon nanotubes, is used, as the size of the light source, a light source has a side of 1 nm or greater. In the case where a film in which a large number of carbon nanotubes are aggregated or a graphene film is used, typically, a light source having a side of 100 nm or greater can be obtained. Typically, the size of the light source may be equal to or smaller than wavelengths of light. For example, the size may be equal to or smaller than the wavelengths of 100 nm or longer, 500 nm or longer, or 1 µm or shorter, and the size can also be 10 µm or greater or 100 µm or greater. It is effective to change the size of the light source according to a measurement target. Typically, the maximum size is approximately 1 mm, but the maximum size of 5 mm or smaller may also be used.

The wavelength selecting structure 30 selects specific wavelengths. The wavelength selecting structure 30 is, for example, a wavelength selection filter or a resonator.

As illustrated in Fig. 2, light La having various wavelengths is emitted from the multiwavelength nanocarbon light source array 100 by arranging a plurality of nanocarbon light source elements 1 outputting light of different wavelengths. In other words, the multiwavelength nanocarbon light source array 100 emits light of multiple wavelengths via the wavelength selecting structures 30. Moreover, the multiwavelength nanocarbon light source array 100 can switch the wavelength by selecting a nanocarbon light beam to be emitted. Specifically, the multiwavelength nanocarbon light source array 100 can switch the wavelength by selecting a nanocarbon light beam to be emitted.

Figs. 1 and 3 to 5 illustrate configuration examples for extracting specific wavelengths. Fig. 1 illustrates an outline of the nanocarbon light source element 1. In Fig. 1, for example, the wavelength selecting structure 30, which is a wavelength selection filter or resonator for transmitting specific wavelengths, is placed on the nanocarbon light source 20.

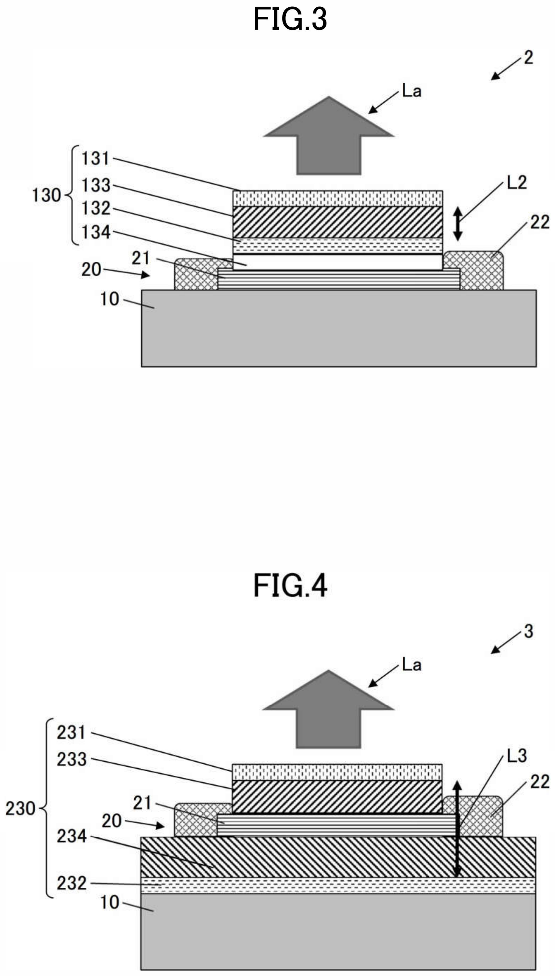

Fig. 3 is a view illustrating an outline of the nanocarbon light source element 2. The nanocarbon light source element 2 includes the nanocarbon light source 20 and a resonator 130. In Fig. 3, the resonator 130 is produced by forming two mirrors (an upper mirror 131 and lower mirror 132) and a transparent material 133 on the nanocarbon light source 20, thereby transmitting only the resonance wavelength. The resonator length L2 of the resonator 130 is defined by the transparent material 133. Moreover, a transparent material 134, which is an insulator, is disposed between the lower mirror 132 and the light-emitting layer 21 of the nanocarbon light source 20. The transparent material 134 may be omitted.

Fig. 4 is a view illustrating an outline of the nanocarbon light source element 3. The nanocarbon light source element 3 includes the nanocarbon light source 20 and a resonator 230. In Fig. 4, the resonator 230 is produced by forming a mirror (an upper mirror 231 and a lower mirror 232) and transparent materials 233 and 234 on the upper and lower sides of a nanocarbon material to enclose the nanocarbon light source 20, thereby transmitting specific wavelengths. The resonator length L3 of the resonator 230 is determined by the transparent material 233, the light-emitting layer 21, and the transparent material 234.

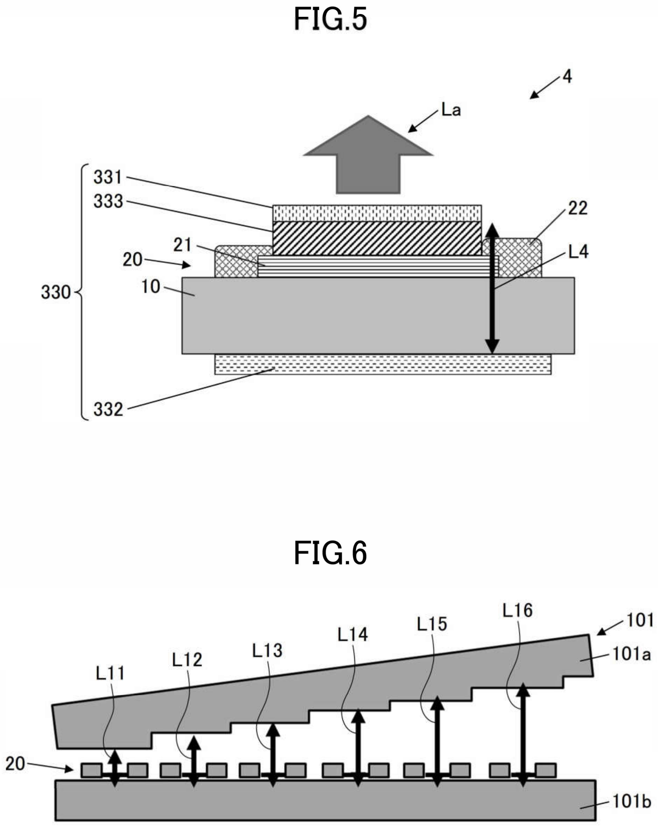

Fig. 5 is a view illustrating an outline of the nanocarbon light source element 4. The nanocarbon light source element 4 includes the nanocarbon light source 20 and a resonator 330. Fig. 5 illustrates the structure in which the lower mirror 232 of the nanocarbon light source element 4 of Fig. 4 is formed on the bottom surface of the substrate 10. The resonator 330 includes an upper mirror 331, a lower mirror 332, and a transparent material 333. The resonator length L4 of the resonator 330 is determined by the transparent material 333 and the substrate 10.

The configuration is not limited to the configuration examples illustrated in Figs. 1 and 3 to 5, as long as a filter or resonator is formed on a nanocarbon light source, thereby emitting specific wavelengths.

A multiwavelength arrayed light source, which can selectively emits only specific wavelengths, can be realized by arranging a large number of light sources, for each of which a filter or a resonator is provided, into an array, and sequentially lighting desired light sources. The multiwavelength arrayed light source is achieved using nanocarbon thermal light sources, which are different from conventional thermal light sources, such as halogen lamps or ceramic heaters. The nanocarbon light sources can form a planar structure, and moreover, ultra-minute light sources, which are of nano-meter order at the minimum, can be integrated on a chip. By using the nanocarbon light sources, the multiwavelength arrayed light source can be realized with an array-shaped light source, which has become possible using a nanocarbon material.

Although it is omitted in Figs. 1 to 5, it is possible to provide a protective film on the surface of the nanocarbon light source to improve operation in the atmosphere or weather resistance. Since the same effect can be obtained even when the nanocarbon light source element includes the protective film, such a configuration is also included in the present invention.

In order to obtain a multiwavelength light source using each of the nanocarbon light emitting elements illustrated in Figs. 2 to 4, a resonance wavelength of a resonator needs to be changed for each light source element. Thus, light sources having different resonator lengths are aligned. As a method of easily changing the resonator length, a mirror 101a that is inclined in a stepwise manner is formed as illustrated in Fig. 6. By forming the resonator with the mirror 101a and the mirror 101b, multiple resonator lengths (from the resonator length L11 to resonator length L16) are formed as illustrated as an example in Fig. 6. By using the step-shaped mirror 101a, the multiwavelength nanocarbon light source array 101, which is an array-structure light source with the resonator lengths being changed easily, can be produced.

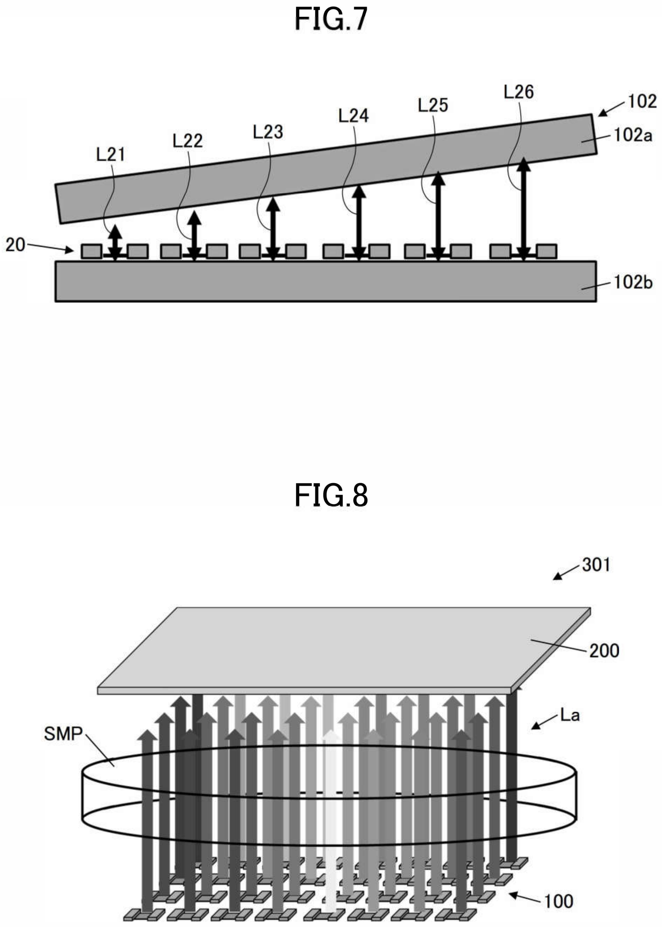

To be further simplified, as illustrated in Fig. 7, a multiwavelength nanocarbon light source array 102, which is an arrayed nanocarbon light source having a resonator structure, can be produced by merely forming a mirror 102a that is slightly inclined. By forming the resonator with the mirror 102a and a mirror 102b, multiple resonator lengths (from the resonator length L21 to resonator length L26) can be formed as illustrated as an example in Fig. 7.

In the above examples, the resonator length is illustrated on the assumption of the configuration in which the upper and lower mirrors are formed on an inner surface of an upper substrate and an inner surface of a lower substrate facing each other, respectively. However, the same effect can be obtained even when, as the positions of the mirrors, the upper and lower mirrors are formed at the outer surface of the upper substrate and the outer surface of the lower substrate, respectively. For example, in Fig. 6, the stepped structure may be formed in the outer surfaces of the upper and lower substrates.

In the examples of Figs. 6 and 7, the nanocarbon light sources are disposed on the inner sides of the upper and lower mirrors, and have the configurations corresponding to Figs. 4 and 5, respectively. However, the nanocarbon light sources may be disposed on the outer sides of the upper and lower mirrors to correspond to Fig. 1 or 3.

By arranging a measurement sample and a light-receiving element with respect to the above multiwavelength array light source, a novel analysis device that can measure a spectrum without using a spectrometer can be realized. Fig. 8 schematically illustrates an analysis chip or analysis device that can perform transmission or absorption spectroscopy or measurement of transmission or absorption spectrum with multiwavelength visible light or infrared light. Since multiwavelength light is sequentially emitted from the light source, a spectrometer is not necessary for spectroscopy, and only one light-receiving element can be disposed at the minimum. Thus, an ultra-small analysis chip or analysis device can be realized.

Fig. 8 is a schematic view of a configuration example of an analysis chip 301 using the multiwavelength nanocarbon light source array 100. The analysis chip 301 measures transmission light, thereby measuring light absorption of a measurement sample SMP. The analysis chip 301 includes the multiwavelength nanocarbon light source array 100 and a detector 200, such as a light-receiving element or the like. The measurement sample SMP that is measured by the analysis chip 301 is set between the multiwavelength nanocarbon light source array 100 and the detector 200. The light La emitted from the multiwavelength nanocarbon light source array 100 passes through the measurement sample SMP. The light transmitted through the measurement sample SMP is received by the detector 200.

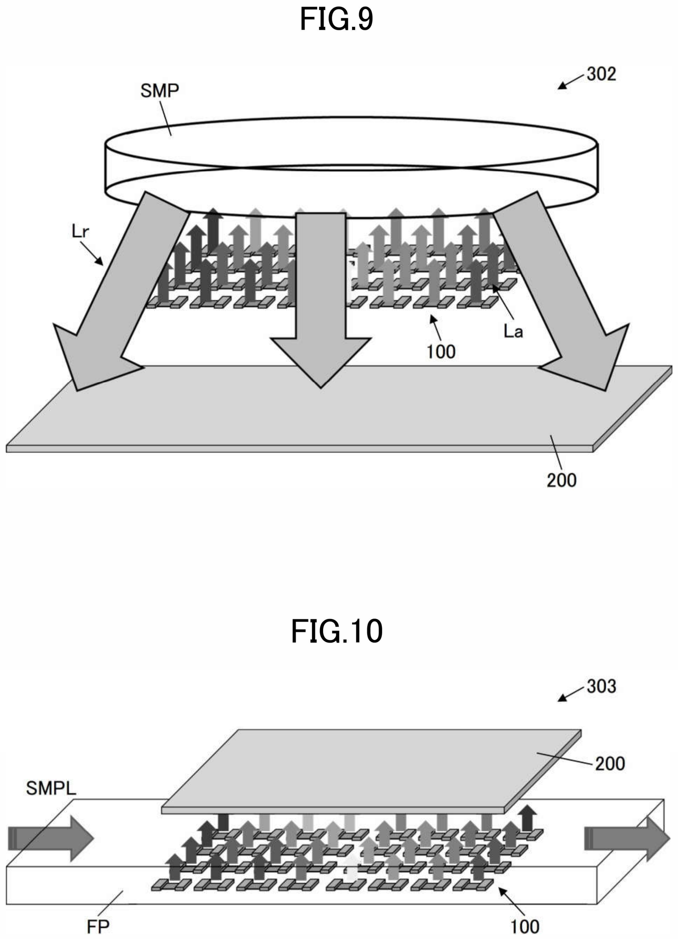

While Fig. 8 illustrates the example of the measurement of absorption by transmission, Fig. 9 illustrates a method of a spectroscopic technique of measuring absorption from reflection light or scattered light.

Fig. 9 is a schematic view of a configuration example of an analysis chip 302 using the multiwavelength nanocarbon light source array 100. The analysis chip 302 measures reflection light or scattered light, thereby measuring light absorption of a measurement sample SMP. The analysis chip 302 includes the multiwavelength nanocarbon light source array 100 and a detector 200. The measurement sample SMP that is measured by the analysis chip 302 is set to face the multiwavelength nanocarbon light source array 100 and the detector 200. The light La emitted from the multiwavelength nanocarbon light source array 100 is reflected or scattered by the measurement sample SMP. Then, the light Lr reflected or scattered by the measurement sample SMP is received by the detector 200.

Fig. 9 illustrates the light reflected or scattered by the measurement sample itself. Althernatively, a mirror may be installed on the opposite side of the sample, ligh transmitted through the sample or a part of the light is reflected by the mirror to travel backward to the light source side, and the light traveling backward may be measured. Hereinafter, in the mechanism in which light is scattered or reflected by the sample, the configuration using the backward light by the mirror is always included in the invention.

As an application of Fig. 8, Fig. 10 illustrates the multiwavelength nanocarbon light source array arranged at the bottom of a flow path or microflow path. By flowing a fluid analysis sample, such as liquid, a gas, or the like, through the flow path or microflow path, a transmission spectrum of the fluid is measured. By providing a light-receiving element above the light source and the fluid sample, wavelength-dependance transmission characteristics or a transmission or absorption spectrum of the fluid can be measured without using a spectrometer. As the light-receiving element, at minimum, a single light-receiving element may be used.

Fig. 10 is a schematic view of a configuration example of an analysis chip 303 using the multiwavelength nanocarbon light source array 100. The analysis chip 303 measures transmission light, thereby measuring light absorption of a measurement sample SMP. The analysis chip 303 includes the multiwavelength nanocarbon light source array 100, a detector 200, and a flow path FP provided between the multiwavelength nanocarbon light source array 100 and the detector 200. The measurement sample SMP to be measured by the analysis chip 303 flows through the flow path FP so that light La emitted from the multiwavelength nanocarbon light source array 100 passes through the measurement sample SMP. Then, the light transmitted through the measurement sample SMP is received by the detector 200.

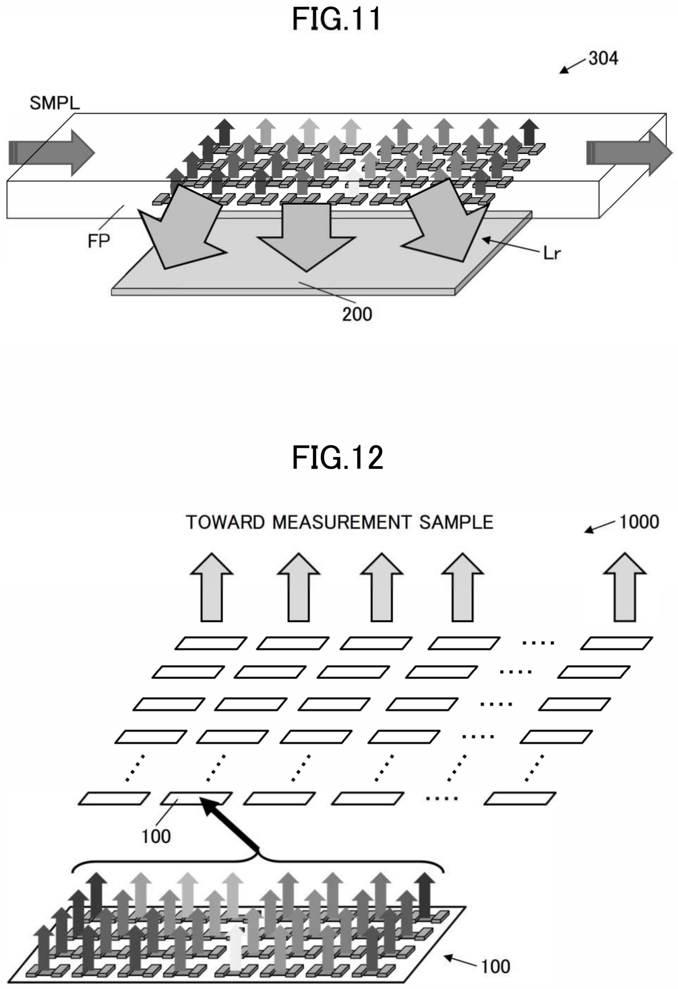

Fig. 11 illustrates, as an application of Fig. 9, measurement of an absorption spectrum of the fluid, which is similarly performed by measuring reflection light or scattered light.

Fig. 11 is a schematic view of a configuration example of an analysis chip 304 using the multiwavelength nanocarbon light source array 100. The analysis chip 304 measures reflection light or scattered light, thereby measuring light absorption of a measurement sample SMP. The analysis chip 304 includes the multiwavelength nanocarbon light source array 100, a detector 200, and a flow path FP. In the analysis chip 304, the multiwavelength nanocarbon light source array 100 and the detector 200 are arranged on the same side with respect to the flow path FP. The light La emitted from the multiwavelength nanocarbon light source array 100 is reflected or scattered by the measurement sample SMP. The light Lr reflected or scattered by the measurement sample SMP is received by the detector 200.

Fig. 11 illustrates the light reflected or scattered by the measurement sample itself within the flow path. Alternatively, a mirror may be installed on the opposite side of the flow path, light transmitted through the sample or part of the light is reflected by the mirror to travel backward to the light source side, and the light traveling backward may be measured.

Fig. 12 is a schematic view of a light source, in pixels are arrayed by using the nanocarbon light source array that can emit multiple wavelengths as one pixel. Fig. 12 is a schematic view of the light source 1000 including a plurality of multiwavelength nanocarbon light source arrays 100. Since multiple wavelengths can be selectively emitted by each pixel, a position-dependent absorption spectrum or the like can be measured by emitting light while individually controlling the positions of pixels or synchronizing. This enables a wavelength-dependent analysis or imaging at once, and it is possible to perform a spectral analysis with image capturing or positional analysis, such as a local analysis, imaging, spectral imaging, or the like, at each wavelength. By scanning the sample, an analysis can be performed with higher resolution or at higher pixel counts.

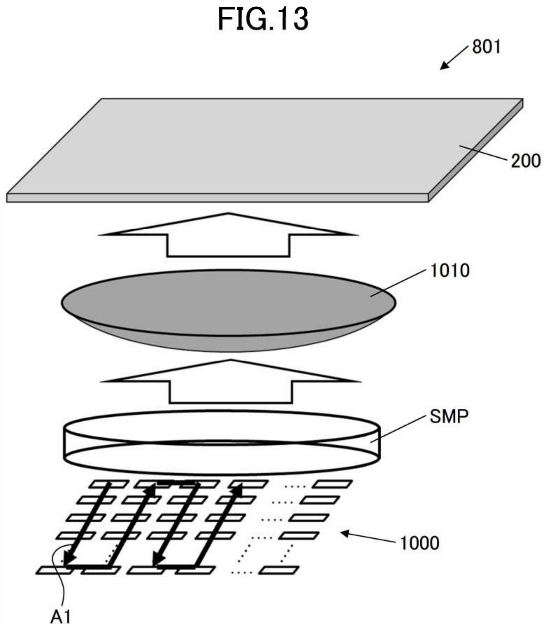

As an example, as illustrated in Fig. 13, a measurement sample SMP to be measured is set above the light source 1000 including a plurality of multiwavelength nanocarbon light source arrays 100. Fig. 13 is a view schematically illustrating an imaging apparatus 801, which is an analysis chip using the light source 1000. In the case where spatial resolution is increased in the above arrangement, the light source and the sample may be brought close to each other until the level of the wavelength so that near field light can be used. Even in the case where the light source and the sample are separated to some degree, imaging, a positional analysis, or the like can be performed at the resolution determined by the diffraction limit or geometric optics. In the case of a local analysis, imaging, or spectral imaging that does not require high resolution, the light source arrays may be arranged in any way. In the illustrated example, for example, the pixels composed of the multiwavelength nanocarbon light source arrays are sequentially lit as illustrated with the arrow A1 so that a position-dependent analysis or spectral imaging can be performed. The transmission light obtained from the light sources is focused by a lens 1010 or the like on the detector 200, which is a light-receiving element or an image sensor, so that spectroscopy and imaging can be performed by one element.

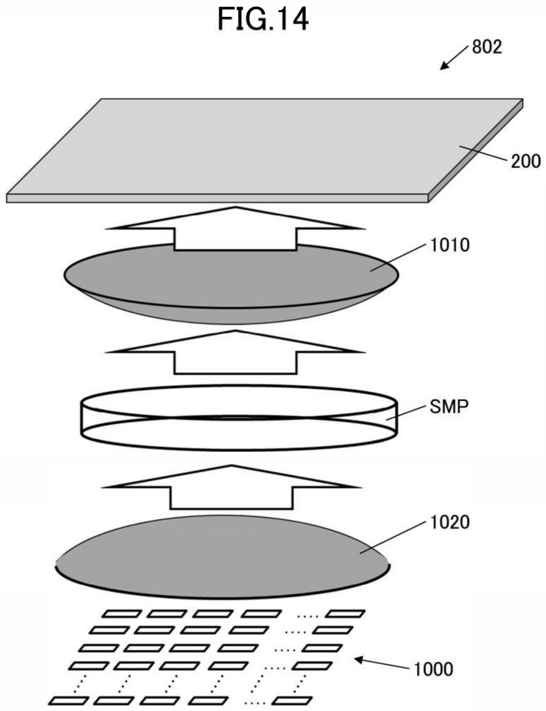

As illustrated in Fig. 14, it is also possible to perform spectral imaging of high spatial resolution, such as imaging performed by a microscope. The spectral imaging of high spatial resolution is performed by focusing the light emitted from the light source 1000, which includes a plurality of multiwavelength nanocarbon light source arrays 100, using a lens 1020, such as an objective lens, applying the focused light to a measurement sample SMP, and again focusing the light transmitted through the measurement sample SMP onto the detector 200, which is a light-receiving element or an image sensor, using a lens 1010. Fig. 14 is a view schematically illustrating an imaging apparatus 802, which is an analysis chip using the light source 1000.

Thus, a ultra-small spectroscopic chip or spectroscopic apparatus that can perform spectroscopy using only one detector, without a spectrometer using a Michelson interferometer or diffraction grating that is required in general infrared analysis, can be provided. Not only general transmission, reflection, and scattering spectrum analyses, but also a small-size analysis chip technology, such as an analysis chip or the like, and new technologies, such as a spectroscopic imaging apparatus or the like, can be realized.

### <Second embodiment>

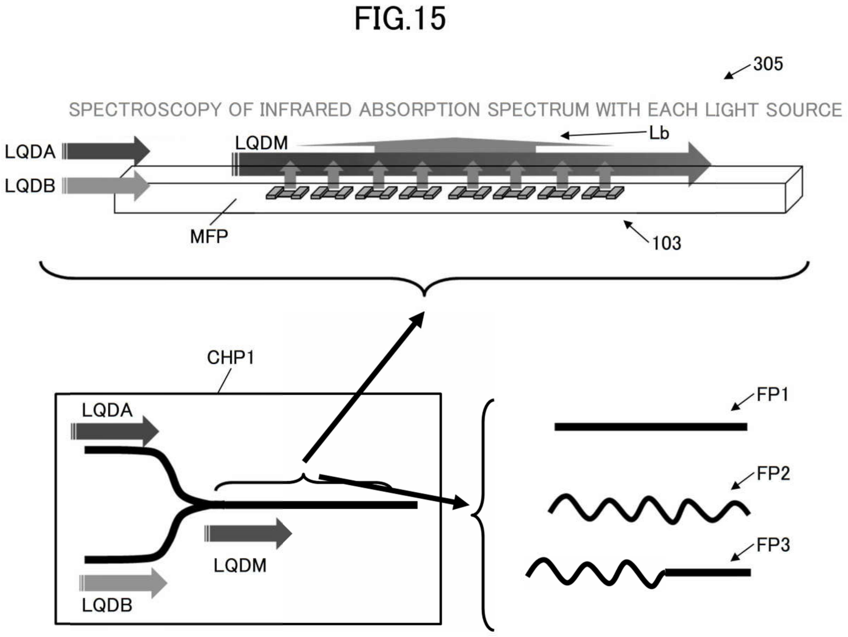

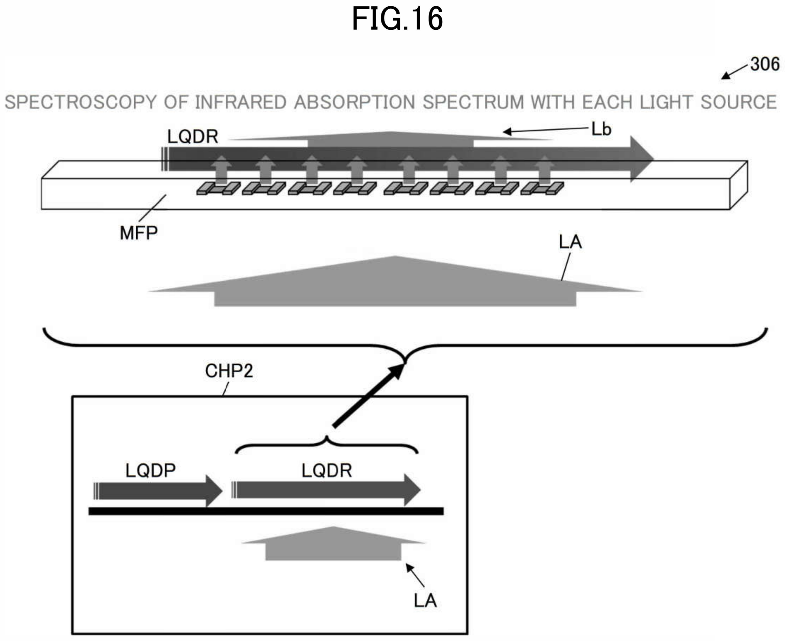

A second embodiment will be described with reference to Figs. 15 and 16. Fig. 15 is a schematic view of an infrared ray analysis chip 305 using a nanocarbon light source array 103 of the second embodiment. Fig. 16 is a schematic view of an infrared ray analysis chip 306 using the nanocarbon light source array 103 of the second embodiment. The second embodiment provides a novel analysis method, which can perform time-resolved infrared spectroscopy for a mixing reaction using the nanocarbon light source. For chemical reactions, such as a mixing reaction, a photochemical reaction, an electrochemical reaction, and the like, stopped flow using Fourier transform infrared spectroscopy (FTIR) or the like is currently known as a time-resolved analysis with an infrared absorption spectrum of the chemical reaction. This method is restricted by the time resolution of FTIR, and basically has the time resolution of approximately several milliseconds even at high speed.

The second embodiment provides a method of performing time-resolved spectroscopy during a chemical reaction, which is performed by infrared absorption spectroscopy using a microflow path and a nanocarbon light source in various chemical reactions, such as a mixing reaction, a photochemical reaction, and an electrochemical reaction. By using the above-described nanocarbon light source array, infrared absorption spectroscopy is performed at desired light source positions by individually changing the positions of the nanocarbon light sources to be lit along the microflow path so that time-resolved infrared spectroscopy utilizing the change in the position of the light source along the flow path can be performed. Thus, time-resolved spectroscopy with infrared absorption spectra of a chemical reaction can be performed to examine various chemical reactions, such as a mixing reaction, a photochemical reaction, an electrochemical reaction, and the like, according to a unique method using the arrayed nanocarbon light source. This method is a novel method for realizing time-resolved infrared spectroscopy by making use of the fact that light sources, which are finer than a microflow path, can be highly densely aligned along the flow path. This method is realized by using the nanocarbon light source array, and according to this method, an infrared analysis can be performed at time resolution largely exceeding the high-speed time resolution of conventional microscopic FTIR.

The position of the nanocarbon light source with respect to the sample on the microflow path is changed by using the nanocarbon light source array 103 as illustrated in Fig. 15. By performing infrared absorption spectroscopy at the position of each of the light sources of the nanocarbon light source array 103, time-resolved infrared spectroscopy utilizing the change in the position of the light source along the flow path can be performed. Thus, time-resolved spectroscopy based on infrared absorption spectra of a chemical reaction can be performed for various chemical reactions, such as a mixing reaction, a photochemical reaction, an electrochemical reaction, and the like, by a unique method using the arrayed nanocarbon light source.

Fig. 15 illustrates an example of time-resolved infrared absorption spectroscopy during a mixing chemical reaction. For a mixing reaction of two components, a flow path chip CHP1 equipped with a microflow path MFP, in which two flow paths merge, is used as a microflow path chip on which a microflow path is mounted. Any number of liquids may be mixed. In the case where three or more liquids are mixed, three or more flow paths may be merged at any flow path position. In the case where the merged fluid undergoes a mixing chemical reaction, the progress of the reaction is different depending on the position of the merged fluid, and the mixing reaction progresses further as the distance from the position at which the liquids are mixed increases.

In the example of Fig. 15, the reaction liquid LQDA and the reaction liquid LQDB are mixed to prepare a mixing reaction sample liquid LQDM. The flow path for mixing the reaction liquid LQDA and the reaction liquid LQDB may be a straight-line flow path PF1, a wavy flow path flow path FP2 for mixing, or a flow path FP3 combining the wavy flow path for mixing and the straight-line flow path.

In the example of Fig. 15, an infrared absorption spectrum of each of the light sources is measured with light Lb transmitted through the mixing reaction sample liquid LQDM during the reaction caused by mixing the reaction liquid LQDA and the reaction liquid LQDB.

In the above example, the nanocarbon light sources are aligned into an array inside or outside the flow path. As the nanocarbon material, carbon nanotubes or graphene can be used. As the carbon nanotubes, a carbon nanotube thin film obtained by aggregating a large number of carbon nanotubes to form a film can be used, or a single carbon nanotube may be used. The graphene portion may be single crystal graphene or polycrystalline graphene, and the number of layers may be a single layer, two layers, or multiple layers of graphene. Up to about several hundred layers, the luminance of light emission can increase, as the number of layers of graphene increases.

In addition, the response speed of the light emission is faster as the number of layers is smaller. With one layer of graphene, the high-speed blinking in the order of gigahertz (GHz) can be achieved at the maximum. The frequency for modulation may be any frequency, as long as the frequency is 10 Hz or greater. Considering an actual application, the frequency is often used at 50 Hz or greater, 100 Hz or greater, or 1 kHz or greater. Moreover, the maximum value of the frequency can be modulated at 1 GHz or less. Typically, high-speed modulation at 1 MHz or less is often used, and in some cases, the maximum value of the frequency is used at 100 kHz or less, or at 10 kHz or less.

Although it is omitted in the drawing, it is possible to provide a protective film on the surface of the nanocarbon light source to improve operation in the atmosphere or weather resistance. The same effect can be obtained even when the nanocarbon light source is provided with the protective film, and therefore the configuration including the protective film is also included in the present invention.

After the flow paths are merged to mix the liquids, the mixing reaction proceeds, and infrared absorption spectroscopy can be performed by each of the nanocarbon light sources disposed at the flow path portion. In this case, the mixing reaction progresses as the distance from the merging point increases. By performing an infrared analysis using light sources that are arranged by sequentially and gradually setting apart from the merging delay, the post-mixing time-dependent infrared absorption spectrum can be obtained. A change in the absorption spectrum with lapse of time is observed by sequentially arranging the infrared analysis spectra obtained using the light sources, respectively, and therefore time-resolved infrared absorption spectroscopy during the mixing reaction can be performed.

Although Fig. 15 illustrates the measurement of the transmission of the light that has passed through the upper surface, the absorption measurement can be similarly performed by measuring the light that is reflected or scattered toward the light source. Moreover, as the shape of the flow path, in addition to the straight-line flow path, a wavy flow path may be used for facilitating a mixing reaction. Alternatively, both the straight-line flow path and the wavy flow path may be joined and used at the same time. In the case where the straight-line flow path is used, a state, in which two liquids flowing through the path are separated in a layered manner, what is called "laminar flow," may be created without causing a mixing reaction of the two solutions. In this case, a chemical reaction can be caused at an interface between the two liquids. Therefore, the chemical reaction, which is different from a mixing reaction, is caused, and time-resolved spectroscopy of the chemical reaction can be performed by infrared absorption spectroscopy during the chemical reaction at the interface.

The above method can be applied for, not only a mixing reaction of liquids, but also a mixing reaction of a solid micro-object, which uses a solid sample dispersed in a liquid. Moreover, by dispersing cells, artificial cells, or the like in a liquid, it is possible to observe a time-lapse change in the reaction of a bio or biological sample caused by mixing with a liquid or supplying a liquid. Therefore, a sample to be analyzed may be in any state, as long as an infrared analysis is performed using a liquid, a flow path, and the nanocarbon light source.

The time resolution can be freely adjusted by adjusting the interval between the arranged nanocarbon light sources and a flow rate (flow speed) of the fluid passing through. A slow chemical reaction can be tracked by decreasing the flow rate of the fluid or extending the interval between the light sources. A chemical reaction can be typically tracked at high speed of 1 µs or faster by increasing the flow rate and arranging the light sources at a higher density. Since the flow rate can be increased freely, there is no upper limit in the time resolution.

The above method can be applied for, not only a mixing reaction of liquids, but also time-resolved infrared analysis of a photochemical reaction or an electrochemical reaction. For example, time-resolved infrared absorption spectroscopy during a photochemical reaction can be performed in the same manner as in Fig. 15 above, by performing an infrared analysis with the nanocarbon light sources in the state in which light LA (light that is externally applied for a photochemical reaction) that induces a photochemical reaction as illustrated in Fig. 16. In this case, light may be applied to the entire flow path to be analyzed, or may be applied to only a position that acts as a trigger for the onset of a reaction. Moreover, time-resolved spectroscopy during an electrochemical reaction can be performed in the same principle by forming electrodes and applying a voltage or electric current instead of light.

In the example of Fig. 16, a photochemical reaction of a sample liquid LQDP, which is before undergoing a photochemical reaction, occurs, as light Lb for a photochemical reaction is externally applied. An infrared ray analysis chip 306 using a nanocarbon light source array 103 measures an infrared absorption spectrum for each of the light sources with the light Lb transmitted through the sample liquid LQDR during the photochemical reaction.

Since time-resolved spectroscopy for any chemical reaction can be performed, including a mixing reaction, a photochemical reaction, and an electrochemical reaction, by aligning the nanocarbon light sources along the flow path and allowing a fluid associated with the chemical reaction to flow through the flow path, the type of the chemical reaction is not limited. By using the arrayed light source along the flow path, time-resolved infrared spectroscopy can be performed at a small scale and high time resolution. The above method can be applied not only in the academic field, such as analysis of a chemical reaction process, but also in a bio analysis or medical diagnostic techniques using time-resolved spectroscopy.

### <Third embodiment>

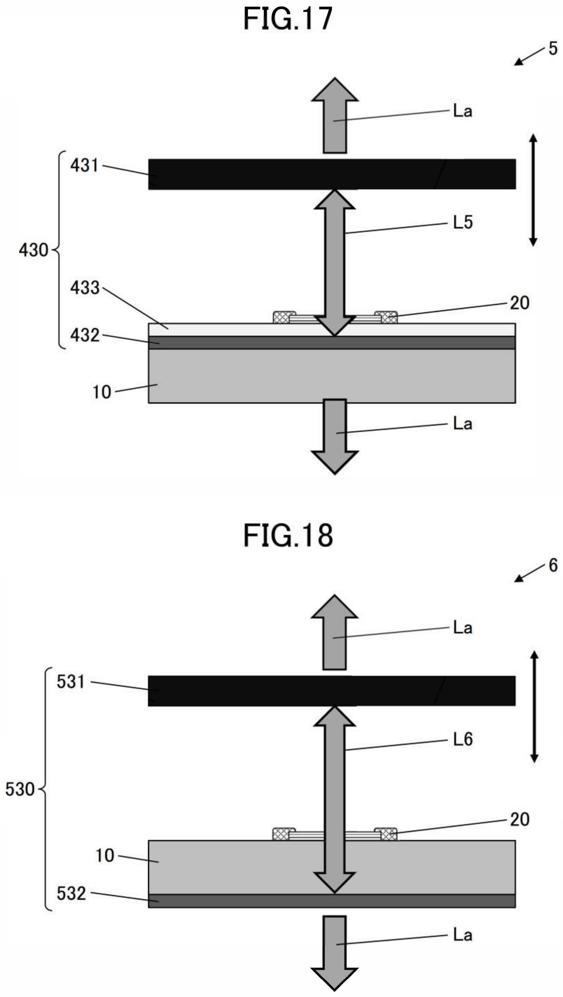

A third embodiment will be described with reference to Figs. 17 to 24. Figs. 17 to 24 correspond to first to seventh examples of the spectroscopic device of the third embodiment, respectively. The third embodiment provides a nanocarbon light source capable of emitting light having various wavelengths with at least one light source owing to a resonator that selects wavelengths and includes mirrors, in which a distance between the mirrors can be varied. By using such an element, an analysis device that can perform spectroscopy is provided, and an infrared analysis technology using the analysis device is provided. The spectroscopic device is an example of the infrared analysis apparatus.

Currently, infrared analyses, such as Fourier transform infrared spectroscopy (FTIR), have been used for an infrared analysis. The above apparatuses perform measurement of spectra using a spectroscopic device, such as a Michelson interferometer or diffraction grating, disposed therein. In the third embodiment, two reflection films (or mirrors) including at least one movable reflection film (or a mirror) is combined with a nanocarbon thermal light source that is graphene or carbon nanotubes formed in a planar shape on a substrate and is achieved by heating upon application of electricity. By using two mirrors or reflection films directly with the light source, spectroscopy can be performed with a small device without using a spectroscopic device, such as a Michelson interferometer or a diffraction grating. The above spectroscopy cannot be realized using conventional large-scale or glass-encapsulated thermal light sources that lack a planar structure, such as incandescent lamps or ceramic light sources. The above spectroscopy is the technique realized by using the nanocarbon light source formed in a planar shape on a substrate. According to this configuration, there can be provided a small-size wavelength-variable light source or analysis device, such as wavelength-variable light sources or spectroscopic elements that can be integrated on a substrate or a chip.

Fig. 17 illustrates a typical configuration example of the present invention. Fig. 17 is a schematic view for explaining a spectroscopic device 5, which is the first example of the spectroscopic device of the third embodiment. A thermal light source (nanocarbon light source 20) formed of a nanocarbon material, such as graphene or carbon nanotube, is formed on a substrate 10. As the nanocarbon material, carbon nanotubes or graphene can be used. As the carbon nanotubes, a carbon nanotube thin film obtained by aggregating a large number of carbon nanotubes to form a film can be used, or a single carbon nanotube may be used. The graphene portion may be a single crystal graphene or a polycrystalline graphene, and the number of layers may be a single layer, two layers, or multiple layers of graphene. Up to about several hundreds of layers, the luminance of light emission can increase, as the number of layers of graphene increases. Moreover, the response speed of the emission increases, as the number of layers decreases. With one layer of graphene, the high-speed blinking in the order of gigahertz (GHz) can be achieved at the maximum. The above light source is different from a conventional halogen lamp or ceramic light source, and it is important that the light source is a light source that is formed in a planar shape on a substrate.

In the example of Fig. 17, a light reflection film (a light source-side reflection film 432) is formed on the substrate 10, an insulating film 433 or the like is formed on the reflection film, and the nanocarbon light source 20 is disposed on the insulating film 433. No member may be disposed between the reflection film (the light source-side reflection film 432) and the nanocarbon light source 20. In addition to the nanocarbon light source 20, a movable mirror (movable mirror 431) is formed with a gap from the nanocarbon light source 20. Thus, light is reflected between the reflection film (the light source-side reflection film 432) below the nanocarbon light source 20 and the movable mirror 431 above the nanocarbon light source 20, thereby forming a resonator structure (a resonator 430). Thus, resonance occurs at specific wavelengths determined by the resonator length L5, thereby emitting light La having specific wavelengths.

As the position of the movable mirror 431 is moved, the resonator length L5 is changed, thereby freely changing the resonance wavelength. Specifically, the resonator length L5 of the resonator 430 can be changed by moving the movable mirror 431. Therefore, a spectrum can be measured by scanning the movable mirror 431 and measuring the emitted light La. An absorption spectrum can be obtained by performing light absorption spectroscopy using the emitted light La. Since the nanocarbon light source 20 can particularly efficiently emit light typically in an infrared region having wavelengths of approximately 1 µm to 20 µm as described above, an infrared absorption spectrum using absorption of infrared rays can be measured by the above method.

In conventional infrared absorption spectroscopy known as FTIR or the like, a spectroscopic device, such as a Michelson interferometer, a diffraction grating, or the like is required. The present invention is a novel device that can perform spectroscopy without the spectroscopic device by moving the movable mirror 431 disposed in the light source (nanocarbon light source 20), thereby providing an ultra-small spectroscopic device. The present technology provides a novel spectroscopic device using a structure unique to the nanocarbon light source. For example, in the case where a halogen lamp or a ceramic light source, which is used in conventional infrared spectroscopy, is used instead of the nanocarbon light source 20, the light source does not have a planar shape, and therefore an interference effect of light can be obtained even when the light source is disposed between two mirrors as in the present invention. Thus, the function of the present invention cannot be achieved by the halogen lamp or ceramic light source. Accordingly, the present technology provides a spectroscopic device unique to the nanocarbon light source that has a planar structure and serves as a thermal light source.

In the spectroscopy with the movable mirror, the intensity of the light depending on the position of the moved mirror is detected by a light detector using resonance or interference of light when the movable mirror is moved. The position-dependency of the light intensity is converted into information of wavelengths by Fourier transformation or the like, thereby measuring a spectrum representing the wavelength dependency. The mirror (reflection film) may be, as well as a metal mirror of gold, silver, aluminum, or the like, a mirror (reflection film) of any material that reflects light, such as a dielectric multilayer mirror.

The substrate 10 may be a substrate of any material, as long as the substrate 10 is a flat substrate. In the case where the spectroscopic device is designed to function by passing light through the substrate, the substrate is preferably transparent to light in the wavelength band used for spectroscopy. When a material transparent to wavelengths for use is used for the substrate, a protective film, an insulating film, or the like, for example, in the case of infrared light, any material that transmits infrared light for use in measurement, such as CaF₂, BaF₂, Ge, Si, KBr, KSR-5, NaCl, ZnSe, ZnS, CsI, SiO₂, Al₂O₃, or the like, may be used. In the case of a configuration in which the substrate does not transmit light, for example, light may be emitted from the opposite side of the light source to the substrate. In the case where the substrate is not disposed between two mirrors, the substrate is not necessarily transparent, and any type of a substrate can be used without any problem.

As the drawings of the present disclosure, the drawings in which light is emitted from the nanocarbon light source 20 side or the counter mirror side are illustrated in Figs. 17 to 24, but these are merely examples, and the emission direction may be either direction, as long as emission light in either direction can be used. In the drawings of the present disclosure, it is illustrated that the nanocarbon light source side is fixed and the counter mirror or detector is movable in Figs. 17 to 24, but any mechanism may be used, as long as the resonator length is changed. For example, the nanocarbon light source side may be movable.

Any positional relationship between the light source and the mirrors is included in the present patent application as long as the nanocarbon light source and the reflection films (mirrors), at least one of which is movable, are formed, and spectroscopy is performed using resonance or interference of light occurred between the mirrors.

The reflection film (mirror) on one side may be formed on or below the nanocarbon light source 20 to be integrated as illustrated in each of Figs. 17, 18 and 19. In this case, the reflection film can be directly formed on or below the nanocarbon light source 20, or on the bottom of the substrate 10, and therefore the configuration is simple and the spectroscopic device can be produced easily.

Although nothing is particularly illustrated between the two mirrors (reflection films) in Figs. 17 to 24 of the present patent, a liquid may be present, or a solid, such as a thin film or the like, may be present between the two mirrors (reflection films), as well as a vacuum or a gas can be present between the two mirrors (reflection films). Although it is omitted in the drawing of the present patent, it is possible to provide a protective film on the surface of the nanocarbon light source to improve operation in the atmosphere or weather resistance. The same effect can be obtained even when the nanocarbon light source is provided with the protective film, and therefore such a configuration is also included in the present invention.

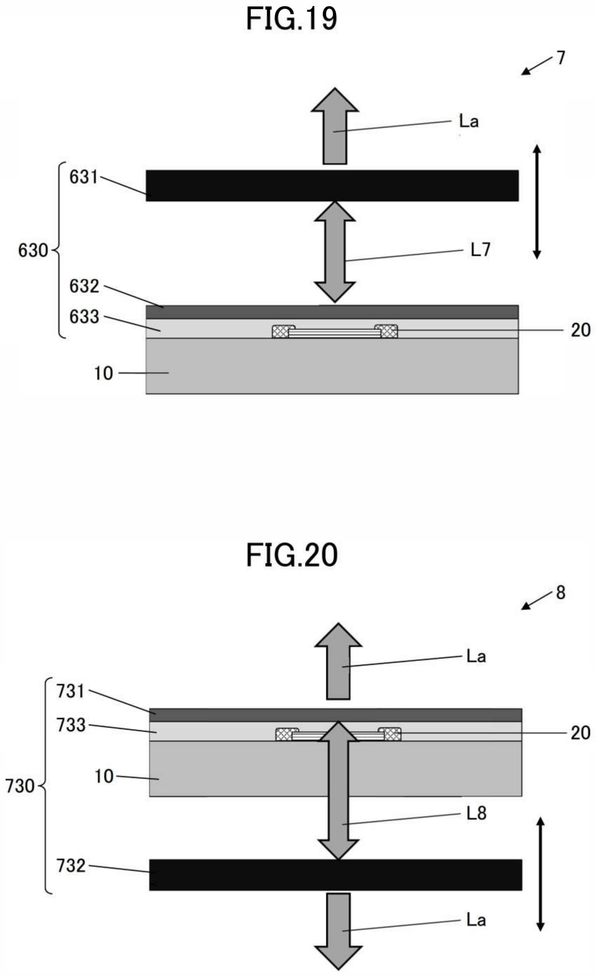

Any positional relationship between the light source and the mirrors is included in the present patent, as long as, in addition to use of the nanocarbon light source 20, the reflection films (mirrors), at least one of which is movable, are used, and spectroscopy is performed using resonance or interference of light occurred between the mirrors. Moreover, the nanocarbon light source 20 may be disposed on the inner sides of the two mirrors as illustrated in Fig. 17 or 18, but it is also possible to perform spectroscopy when the nanocarbon light source 20 is disposed on the outer sides of the two mirrors as illustrated in Fig. 19.

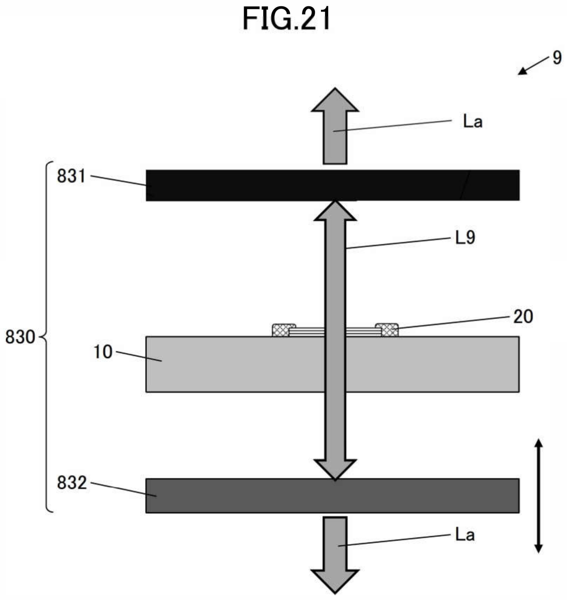

As illustrated in Fig. 20, the movable mirror (movable mirror 732) may be formed on the back surface side of the substrate 10 for the nanocarbon light source 20. As illustrated in Fig. 21, the mirrors (the fixed mirror 831 and the movable mirror 832) may be formed to sandwich the substrate 10 for the nanocarbon light source 20 from the top and the bottom. For example, the mirror on one side may be fixed, and the mirror on the other side may be a movable mirror.

Fig. 17 is the schematic view of the spectroscopic device 5, which is the first example of the spectroscopic device of the third embodiment. The spectroscopic device 5 emits light La, which is light having specific wavelengths. In other words, the spectroscopic device 5 emits light La, which is light causing interference by the resonator 430. The spectroscopic device 5 includes the substrate 10, the nanocarbon light source 20, and the resonator 430. The resonator 430 includes the movable mirror 431, the light source-side reflection film 432 (lower mirror), and the insulating film 433. The movable mirror 431 is disposed with a gap from the nanocarbon light source 20. The light source-side reflection film 432 is disposed on the nanocarbon light source 20 side of the substrate 10. Moreover, the insulating film 433 is disposed between the nanocarbon light source 20 and the light source-side reflection film 432. The resonator length L5 of the resonator 430 is determined by the movable mirror 431 and the light source-side reflection film 432. The resonator length L5 can be changed by moving the movable mirror 431 toward or away from the light source-side reflection film 432.

Fig. 18 is a schematic view of a spectroscopic device 6, which is a second example of the spectroscopic device of the third embodiment. The spectroscopic device 6 emits light La that is light having specific wavelengths. In other words, the spectroscopic device 6 emits light La that is light causing interference by a resonator 530. The spectroscopic device 6 includes the substrate 10, the nanocarbon light source 20, and a resonator 530. The resonator 530 includes a movable mirror 531 and a light source-side reflection film 532 (lower mirror). The movable mirror 531 is disposed with a gap from the nanocarbon light source 20. The light source-side reflection film 532 is disposed on the opposite side of the substrate 10 to the nanocarbon light source 20. The resonator length L6 of the resonator 530 is determined by the movable mirror 531 and the light source-side reflection film 532. The resonator length L6 can be changed by moving the movable mirror 531 toward or away from the light source-side reflection film 532.

Fig. 19 is a schematic view of a spectroscopic device 7, which is a third example of the spectroscopic device of the third embodiment. The spectroscopic device 7 emits light La that is light having specific wavelengths. In other words, the spectroscopic device 7 emits light La that is light causing interference by a resonator 630. The spectroscopic device 7 includes the substrate 10, the nanocarbon light source 20, and the resonator 630. The resonator 630 includes a movable mirror 631, a light source-side reflection film 632 (lower mirror), and a protective film 633. The movable mirror 631 is disposed with a gap from the nanocarbon light source 20. The nanocarbon light source 20 is covered with the protective film 633. The light source-side reflection film 632 is disposed on the opposite side of the protective film 633 to the nanocarbon light source 20. The resonator length L7 of the resonator 630 is determined by the movable mirror 631 and the light source-side reflection film 632. The resonator length L7 can be changed by moving the movable mirror 631 toward and away from the light source-side reflection film 632.

Fig. 20 is a schematic view of a spectroscopic device 8, which is a fourth example of the spectroscopic device of the third embodiment. The spectroscopic device 8 emits light La that is light having specific wavelengths. In other words, the spectroscopic device 8 emits light La that is light causing by a resonator 730. The spectroscopic device 8 includes the substrate 10, the nanocarbon light source 20, and the resonator 730. The resonator 730 includes a light source-side reflection film 731 (upper mirror), a movable mirror 732, and a protective film 733. The nanocarbon light source 20 is covered with the protective film 733. The light source-side reflection film 731 is disposed on the opposite side of the protective film 733 to the nanocarbon light source 20. The movable mirror 732 is disposed with a gap from the nanocarbon light source 20. The resonator length L8 of the resonator 730 is determined by the light source-side reflection film 731 and the movable mirror 732. The resonator length L8 can be changed by moving the movable mirror 732 toward and away from the light source-side reflection film 731.

Fig. 21 is a schematic view of a spectroscopic device 9, which is a fifth example of the spectroscopic device of the third embodiment. The spectroscopic device 9 emits light La that is light having specific wavelengths. In other words, the spectroscopic device 9 emits light La that is light causing interference by a resonator 830. The spectroscopic device 9 includes the substrate 10, the nanocarbon light source 20, and the resonator 830. The resonator 830 includes a fixed mirror 831 (upper mirror) and a movable mirror 832. The fixed mirror 831 is disposed with a gap from the nanocarbon light source 20. The movable mirror 832 is disposed on the opposite side of the substrate 10 to the fixed mirror 831 with a gap from the nanocarbon light source 20. The resonator length L9 of the resonator 830 is determined by the fixed mirror 831 and the movable mirror 832. The resonator length L9 can be changed by moving the movable mirror 832 toward and away from the fixed mirror 831.

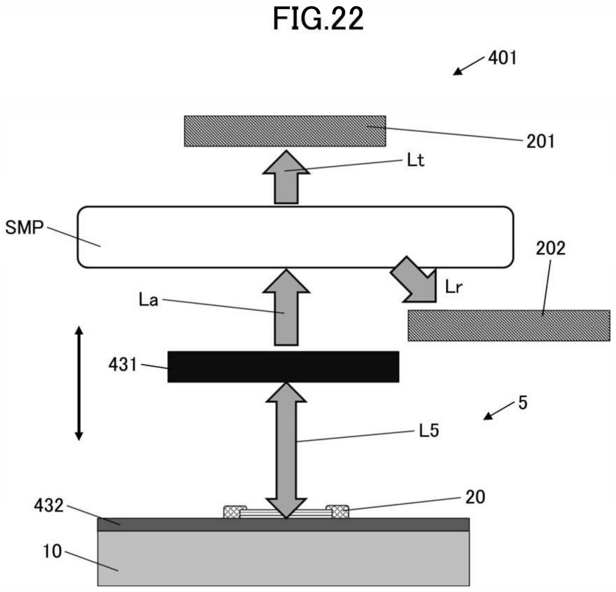

While each of Figs. 17 to 21 illustrates a wavelength-variable light source or interference element in which the nanocarbon light source and two reflection members (the mirror and the reflection film) are mounted, Fig. 22 illustrates an infrared absorption device in which a detector is mounted in addition to the components above. Fig. 22 is a schematic view of a spectroscopic device 401, which is an example of a device that performs infrared absorption spectroscopy using, for example, the device (spectroscopic device 5) of Fig. 17. Although Fig. 22 illustrates the example of the infrared absorption spectroscopy using the spectroscopic device 5 of Fig. 17, any of the spectroscopic devices of Figs. 17 to 21 can be used for the infrared absorption spectroscopy of Fig. 22. In Fig. 22, the insulating film 433 is omitted.

In the spectroscopic device 401 of Fig. 22, light La emitted from the light source (spectroscopic device 5) of Fig. 17 is applied to a measurement sample SMP. Specific wavelength band within the light applied to the measurement sample SMP is absorbed by the measurement sample SMP through infrared absorption or the like due to vibrations of functional groups in the measurement sample SMP. The light subjected to the absorption is passed through the sample and detected as transmission light Lt by the detector 201. Alternatively, light Lr, which is reflection light or scattered light, can be detected by the detector 202. The measurement sample SMP may be a solid, a liquid, or a gas. As the measurement sample SMP, a sample in a flow path can be measured using the flow path or the like.

Spectroscopy can be performed on the measurement sample SMP by setting the measurement sample SMP to be measured on the outer sides or inner sides of the two mirrors (the movable mirror 431 and the light source-side reflection film 432). Fig. 22 illustrates the example of the spectroscopic device 401, in which the measurement sample SMP is set on the outer side of the two mirrors (the movable mirror 431 and the light source-side reflection film 432). The detector (the detector 201 and the detector 202) can be set in any position as long as the detector can detect transmission light, or, alternatively, reflection light or scattered light.

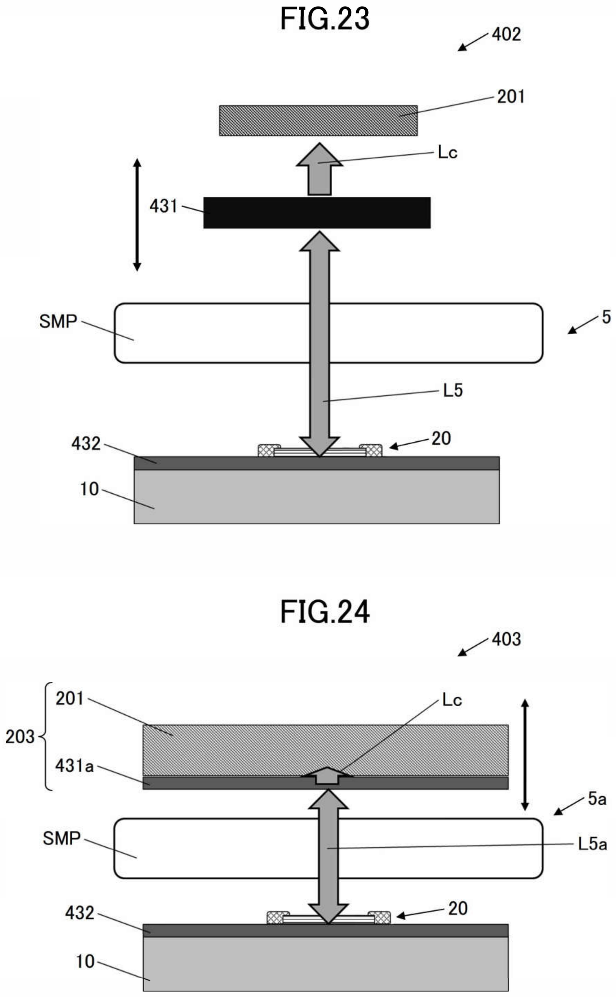

Fig. 23 illustrates an example in which the measurement sample SMP is set on the inner side of the two mirrors (the movable mirror 431 and the light source-side reflection film 432). Fig. 23 is a schematic view of the spectroscopic device 402 that performs infrared absorption spectroscopy using, for example, the device (the spectroscopic device 5) of Fig. 17. In Fig. 23, the measurement sample SMP may be a solid, a liquid, or a gas. The space between the two mirrors (the movable mirror 431 and the light source-side reflection film 432) can be a vacuum or a gas. In addition, there is no problem if the space between the two mirrors is in any state or any atmosphere, such as a solid or the like. In case of a solid, since the influence of scattering or the like is reduced, measurement efficiency or wavelength resolution is improved more, as the influence of scattering or the like is reduced. Moreover, as the measurement sample SMP, a sample in a flow path can be measured using the flow path or the like.

In the case where the measurement sample SMP is arranged inside the resonator, light reciprocates many times between the two mirrors due to resonance between the two mirrors, and therefore light passing through the measurement sample SMP is efficiently absorbed by the sample, thereby improving the measurement sensitivity.

As illustrated in Fig. 24, the mirror on one side may be formed as a reflection film (the reflection film 431a) disposed directly on the detector 201. In other words, the detector 201 is movable so that the reflection film 431a acts as a movable mirror. Fig. 24 is a schematic view of the spectroscopic device 403 that performs infrared absorption spectroscopy using, for example, a spectroscopic device 5a that is a modification example of the device (the spectroscopic device 5) of Fig. 17. The detector 201 receives light Lc that is light having specific wavelengths. The resonator length L5a of the resonator is determined by the reflection film 431a and the light source-side reflection film 432. In this case, the element can be simplified so that the element can be easily produced. The interface between the detector 201 and the reflection film 431a may be formed by direct bonding between the detector 201 and the reflection film 431a, or a transparent film or the like may be inserted between the detector 201 and the reflection film 431a. The detector 201 equipped with the reflection film 431a (movable mirror) is determined as a detector 203. Specifically, the detector 203 is a movable detector with a mirror.

In the present invention, a device that performs spectroscopy using a small-size device without using a spectroscopic device, such as a Michelson interferometer, a diffraction grating, or the like, is provided by using a nanocarbon thermal light source, which is obtained by forming graphene or carbon nanotubes in a planar shape on a substrate and is realized by heating upon application of electricity, and using two mirrors that are formed in the device and includes a movable mirror. The above spectroscopy cannot be realized using conventional large-scale or glass-encapsulated thermal light sources that lack a planar structure, such as incandescent lamps or ceramic light sources. The above spectroscopy is the technique realized only by using the nanocarbon light source formed in a planar shape on a substrate, which serves as the light source.

### <Fourth embodiment>

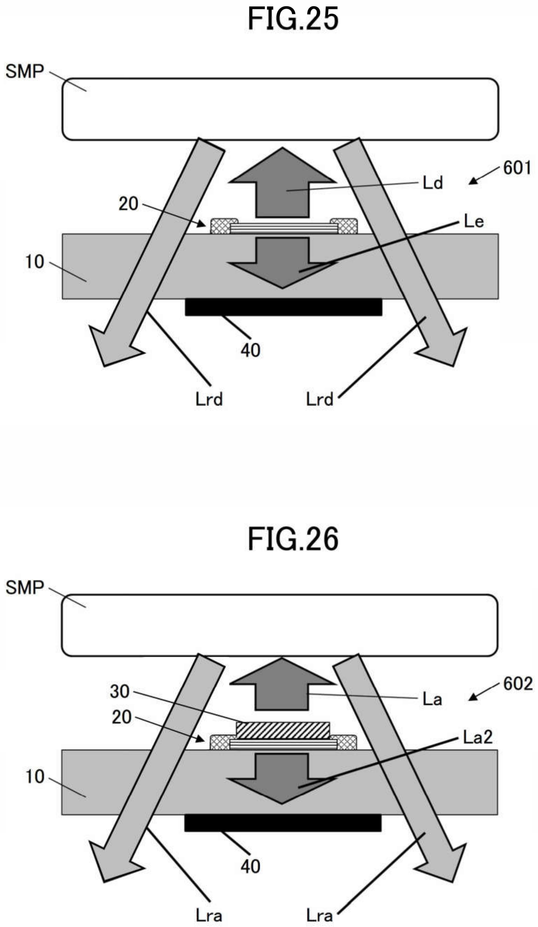

A fourth embodiment will be described with reference to Figs. 25 to 32. Figs. 25 to 32 correspond to first to eighth examples of an analysis device of the fourth embodiment, respectively. The fourth embodiment provides a technology that realizes an analysis using reflection light or scattered light from a light source to a background direction, such as a reflection light or scattered light analysis in the infrared analysis technology using the nanocarbon light source. The analysis device is an example of the infrared analysis apparatus. In Fig. 25, light reflected or scattered by a measurement sample itself is illustrated, but a mirror may be disposed behind the measurement sample with respect to the emission direction, the light transmitted through the sample or part of the light is reflected by the mirror to return backward with respect to the light source side, and the backward light may be measured.

Currently, infrared analyses, such as Fourier transform infrared spectroscopy (FTIR), have been used for an infrared analysis. The above apparatuses perform, in addition to transmission spectroscopy of infrared, but also, what is called reflectance spectroscopy, in which reflected or scattered light that has been emitted is received to perform absorption spectroscopy. In general, the measurement can be performed by observing reflection or scattering of the light emitted from the top. However, when measurement is performed by bringing a small light source, such as the nanocarbon light source, close to a measurement sample in this method, the light generated from the light source itself is simultaneously received together with reflection light or scattered light. Therefore, direct and strong light from the light source superimposed with weak light, such as reflection light or scattered light, is observed, which makes the observation of the reflection light or scattered light to be measured difficult.

Fig. 25 is a schematic view of an analysis device 601, which is a first example of the analysis device of a fourth embodiment. The analysis device 601 includes the substrate 10, the nanocarbon light source 20, and a light-shielding layer 40. The light-shielding layer 40 shields light-source back light Le that is light directed from the nanocarbon light source 20 to the background. The light Ld emitted from the nanocarbon light source 20 toward a measurement sample SMP is reflected or scattered by the measurement sample SMP, and the light Lrd, which is reflection light or scattered light, is passed through the substrate 10 to be directed toward the back side of the nanocarbon light source 20. A spectrometer or light-receiving element is arranged on the back side of the nanocarbon light source 20.

As illustrated in Fig. 25, there is provided a technology in which an absorber or mirror is formed on the back of the nanocarbon light source 20, and the light is received by a spectrometer or near-infrared ray receiving element arranged behind the nanocarbon light source 20 to perform an analysis or imaging with reflection light or scattered light. The drawings of Figs. 25 to 32 illustrate views in each of which the nanocarbon light source 20 is arranged on the upper surface of the substrate 10 (i.e., the measurement sample SMP side). However, even when the nanocarbon light source 20 is disposed on the back side of the substrate 10, light is applied to the measurement sample SMP via the substrate 10 and therefore the same effect is obtained. Thus, such a configuration is included in the present invention. In this case, for example, taking Fig. 25 as an example, the same effect can be obtained by forming an insulator on the surface of the nanocarbon light source 20, which is disposed on the back side of the substrate 10, and arranging a shielding layer on the insulator. In this manner, in each view of Figs. 25 to 32, the same effect can be obtained by arranging the nanocarbon light source 20 on the back side of the substrate 10.

Although it is omitted in the drawings of the present disclosure, it is possible to provide a protective film on the surface of the nanocarbon light source 20 to improve operation in the atmosphere or weather resistance. The same effect can be obtained even when the nanocarbon light source 20 is provided with the protective film, and therefore such a configuration is also included in the present invention.

In addition, the drawings of Figs. 25 to 32 are each illustrated on the premise that as the substrate 10, a substrate that transmits infrared rays is used. However, the same effect can be obtained by forming a "hole" for passing light through to the back surface, instead of using a transparent substrate. In this case, any type of a substrate can be used, provided that a hole can be formed. For example, light can be extracted to the back, even if a substrate that does not transmit infrared rays is used, as long as a hole is formed in the substrate. Thus, the same effect can be obtained. The above configuration can be applied in each of the drawings of Figs. 25 to 32.

As illustrated in Fig. 26, a wavelength selecting structure 30 may be provided to the nanocarbon light source 20. The wavelength selecting structure 30 forms a filter or resonator for specific wavelengths. Fig. 26 is a schematic view of an analysis device 602, which is a second example of the analysis device of the fourth embodiment. The analysis device 602 includes the substrate 10, the nanocarbon light source 20, the wavelength selecting structure 30, and a light-shielding layer 40. The nanocarbon light source 20, the wavelength selecting structure 30, and the light-shielding layer 40 may be collectively referred to as a nanocarbon element. The light-shielding layer 40 shields light-source back light La2 that is light emitted from the nanocarbon light source 20 to the back. Light La, in which wavelengths are selected, is emitted from the nanocarbon light source 20 toward the measurement sample SMP. The light La is reflected or scattered by the measurement sample SMP, and the light Lra, which is reflection light or scattered light, passes through the substrate 10 and is emitted toward the back side of the nanocarbon light source 20. The light Lra is light having selected wavelengths. The light-shielding layer 40, such as an absorber, a mirror, or the like, is formed on the back of the nanocarbon light source 20, and the light Lra is received by a spectrometer or a mid-infrared light-receiving element disposed behind the light-shielding layer 40 to perform an analysis or imaging with the reflection light or scattered light.

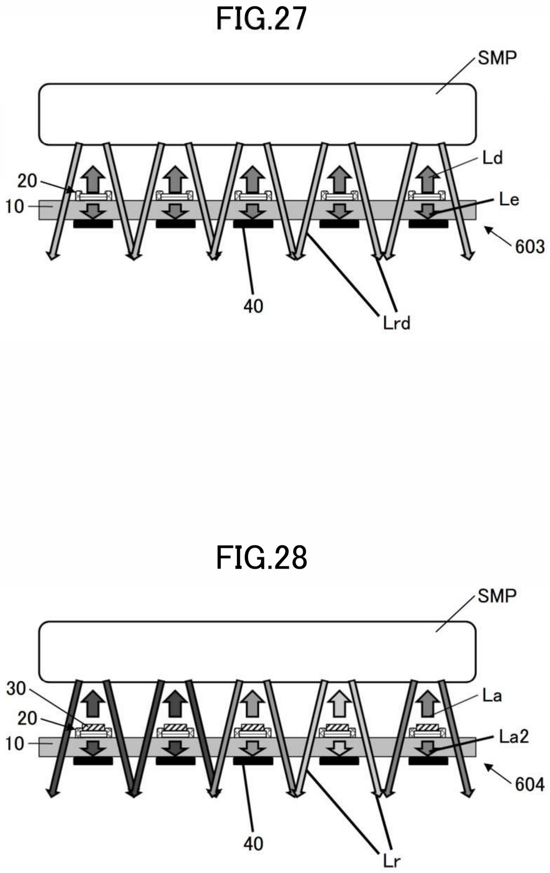

As illustrated in Fig. 27, the nanocarbon light sources 20 may be arranged into an array, the light-shielding layer 40, such as an absorber or a mirror, may be formed on the back of each of the nanocarbon light sources 20, and light Lrd may be received by a spectrometer or mid-infrared light-receiving element disposed behind the light-shielding layers 40 to perform an analysis or imaging with reflection light or scattered light. Fig. 27 is a schematic view of an analysis device 603 that is a third example of the analysis device of the fourth embodiment. Thus, a position-dependent analysis or imaging can be performed by sequentially lighting on the light sources. In addition to position-dependent spectroscopy or imaging by the spectrometer, imaging can be performed with specific wavelengths by forming a filter or resonator at any position between the light sources and the detector to transmit light having the specific wavelengths, and lighting the light source while changing the position of the light source to be lit.

As illustrated in Fig. 28, the nanocarbon light sources 20 on each of which a wavelength selecting structure 30 composed of a filter or resonator for specific wavelengths is formed, may be arranged into an array, the light-shielding layer 40, which is an absorber or a mirror, may be formed on the back of each of the nanocarbon light sources 20, and light may be received by a spectrometer or a mid-infrared light-receiving element disposed behind the light-shielding layer 40 to perform an analysis or imaging with reflection light or scattered light. Specifically, the nanocarbon light source 20, the wavelength selecting structure 30, and the light-shielding layer 40 are collectively referred to as a nanocarbon element, and a plurality of nanocarbon elements may be provided. Fig. 28 is a schematic view of an analysis device 604, which is a fourth example of the analysis device of the fourth embodiment. Particularly in this technique, light having predetermined wavelengths can be emitted from the light sources side by changing a transmission wavelength of the filter or resonator for each of the light sources, and therefore an analysis or spectroscopy with the specific wavelengths can be performed without a spectrometer.

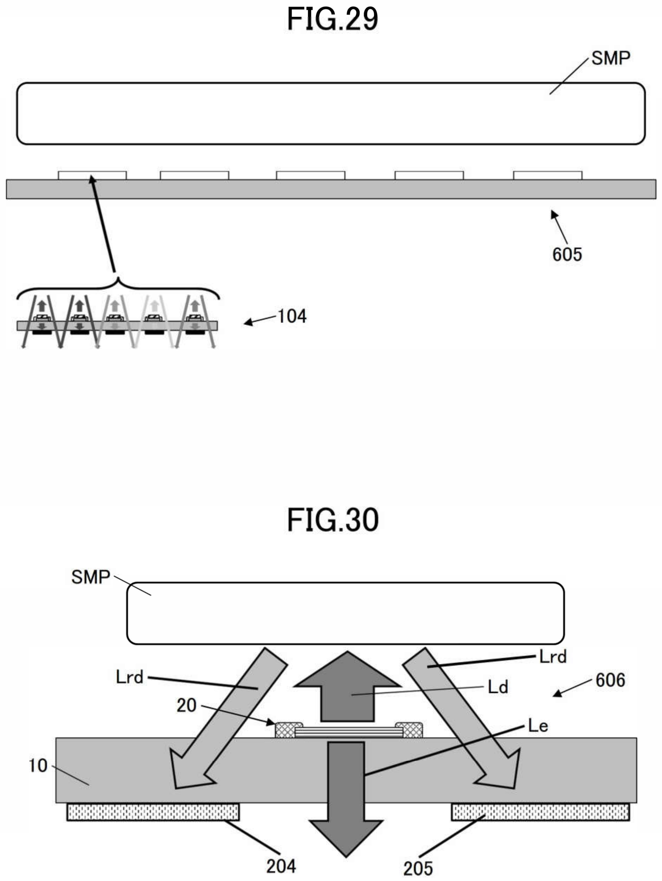

As illustrated in Fig. 29, a group 104 of nanocarbon light source arrays, which emits light of various wavelengths, is determined as one pixel, and muptile pixels may be disposed. Fig. 29 is a schematic view of an analysis device 605, which is a fifth example of the analysis device of the fourth embodiment. By forming the light-shielding layer 40, which is an absorber or a mirror, on the back of each of the nanocarbon light sources 20, spectroscopy or spectral imaging can be performed at the specific position with reflection light or scattered light. An analysis at a higher resolution or high pixel number can be performed by scanning the sample.

As illustrated in Fig. 30, a detector 204 and a detector 205, which are light-receiving elements, may be arranged to srround a position corresponding to the nanocarbon light source 20 on the back side of the substrate 10. Fig. 30 is a schematic view of an analysis device 606, which is a sixth example of the analysis device of the fourth embodiment. Reflection light or scattered light spectroscopy that does not require the above-described back-side absorber or mirror can be performed by arranging the light-receiving elements sensitive only to the periphery of the nanocarbon light source.

As the light-receiving elements, carbon-based light-receiving elements using graphene or carbon nanotubes can be used, in addition to semiconductor light-receiving elements, such as MCT (HgCdTe: mercury, cadmium, and tellurium) InSb, InAs, InAsSb, InGaAs, Si, super lattice light-receiving elements, borometers, thermopiles, pyroelectric elements, and the like.

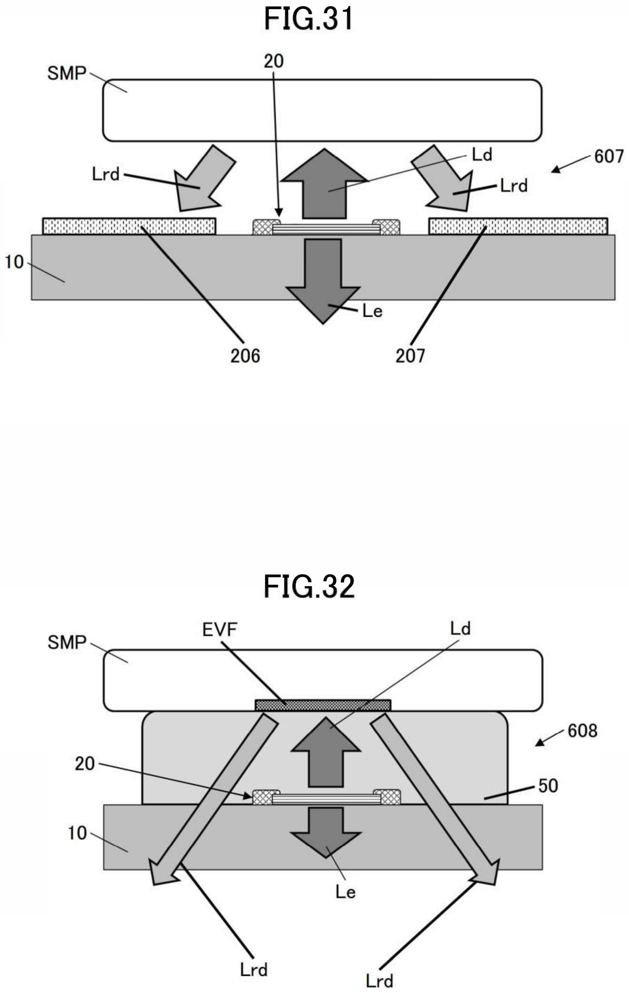

As illustrated in Fig. 31, when light-receiving elements are formed on the periphery of a graphene light source (a nanocarbon light source 20) on the same substrate (the substrate 10) on which the nanocarbon light source 20 is provided, an analysis or imaging can be performed with reflection light or scattered light using the light source (the nanocarbon light source 20), and the detector 206 and the detector 207, which are the light-receiving elements, on the same substrate (the substrate 10). Fig. 31 is a schematic view of an analysis device 607, which is a seventh example of the analysis device of the fourth embodiment. As the detector 206 and the detector 207, which are the light-receiving elements that can be formed on the same substrate, carbon-based light-receiving elements using graphene or carbon nanotubes can be used, in addition to semiconductor light-receiving elements, such as MCT (HgCdTe: mercury, cadmium, and tellurium) InSb, InAs, InAsSb, InGaAs, Si, super lattice light-receiving elements, borometers, thermopiles, pyroelectric elements, and the like.

As illustrated in Fig. 32, a high refractive index layer (a transparent layer 50) may be disposed above the nanocarbon light source 20. Fig. 32 is a schematic view of an analysis device 608, which is an eighth example of the analysis device of the fourth embodiment. An analysis can be performed when the nanocarbon light source 20 and a measurement sample SMP are brought into direct contact with each other. In order to easily perform an analysis with reflection light or scattered light, the transparent layer 50 formed of a transparent material having a high refractive index is preferably disposed on the nanocarbon light source 20. The total reflection occurs and the evanescent field EVF is generated at the surface of the transparent layer 50, which is the high refractive index layer, and therefore an analysis of reflection light or scattered light can be performed at high sensitivity. The above method can be commonly applied in any of the above-described methods in Figs. 25 to 31. The transparent material having a high refractive index may be opaque outside the range of wavelengths for the analysis, as long as the transparent material transmits light in the wavelength range used for the analysis.

For the sample that can be measured, a sample of any field or form, such as a solid, a liquid, a gas, a bio sample, cells, or the like, can be measured. Moreover, the measurement can be performed on a fluid in a flow path, such as a microflow path. In addition, the measurement can be performed with an analysis chip by inserting the above mechanism of the invention in a flow path, such as a microflow path or the like. As characteristics of the measurement using reflection or scattering toward the back side, a significant characteristic is that the measurement can be performed on the sample of any thickness. In general transmission spectroscopy, it is necessary to sufficiently transmit light used for an analysis, such as infrared light, and therefore the thickness of the sample, which is a solid or a liquid, is generally several hundreds of nanometers to several hundreds of micrometers in many cases, and the thickness of the sample needs to be set so that a sufficient level of transmission light is obtained. In the reflection light or scattered light spectroscopy of the present invention, conversely, a significant characteristic is such that measurement can be performed on the measurement target of any thickness.

Since an infrared anlysis can be performed on a measurement target of any thickness by bringing the element of the present invention into contact with the measurement sample, a contact-type infrared analysis device can be developed. A general contact-type infrared analysis uses an extremely large-size infrared light source, or needs a spectrometer, and therefore the device for use is a large-size device. In the present invention, an infrared analysis can be performed above a chip by using the nanocarbon light source. Therefore, a very small contact-type infrared analysis device can be realized.

In particular, as an application of the present element, a contact-type infrared analysis device, which is brought into contact with a surface of a living body, such as a human, an organism, or the like, can be realized. Thus, various portable small-size infrared analysis chips, for example, a watch type or a portable type, can be provided. In case of a watch type, for example, when the present device is formed on the back surface of the watch, an infrared analysis can be performed on the surface of the human, such as the skin or the like at any time. In the case of a clock-type or portable type, it is possible to perform an infrared analysis on the vicinity of a blood vessel or epidermis of an organism or a human. Thus, a blood test technique using infrared rays, which can be monitored all the time, can be realized. In addition, it is possible to perform an infrared analysis on the epidermis as well as the blood.

For a blood sugar level diagnosis, a concentration of glucose, cholesterol, hormones, tumor markers, enzymes, chemical substances, or the like can be always monitored by infrared rays. The present technique is particularly effective for measurement with mid-infrared rays having a wavelength of 5 µm or longer among infrared rays, and is suitable for measurement of a concentration of glucose, cholesterol, hormones, or the like in the blood. In addition, it is also possible to monitor a substance in the blood, which is carried out in a general blood test or the like.

For example, the above technique can be applied for an analysis of glucose, cholesterol, hormones, tumor markers, biomarkers, disease markers, enzymes, or chemical substances in the blood, skin, breath, or the like used for health monitoring, health check-ups, or disease examinations, such as analyses of AST(GOT), ALT(GPT), γ-GT, ALP, ChE, LDH, total protein, albumin, A/G ratios, total bilirubin, HBs antigens, HBs antibodies, HCV antibodies, total cholesterol, triglyceride, HDL-C, LDL-C, nonHDL-C, blood glucose, HbAlc (N), uric acid (UA), C-reactive protein, urea nitrogen (BUN), creatine, e-GFR, amylase, white blood cell counts (WBC), red blood cell counts (RBC), hemoglobin levels, hematocrit, MCV, MCH, MCHC, platelet counts, AFP quantification, CEA, prostatic PSA, CA125, CA15-3, elastase, CYFRA, CA19-9, genes, proteins, lactic acid, or the like. In addition, the concentration of carbon dioxide in the blood can be measured by the infrared analysis. The infrared analysis may be applied for any health monitoring, health check-ups, or disease examinations as long as it can measure a substance or the like generated at the surface of the human body or from the human body, such as skin, blood vessels, breath, sweat, and the like.

When the arrayed light source that emits light of various wavelengths is used as illustrated in Fig. 28, it is possible to perform spectroscopy even with one detector. When the arrayed light source that emits light of various wavelengths is spatially arranged as illustrated in Fig. 29, spectroscopy can be performed, and a position-dependent infrared analysis can be performed.

For example, in the case of a watch-type analysis device, since multiwavelength arranged light sources are spatially aligned as illustrated in Fig. 29, spectroscopy can be performed at various positions of the skin when the back side of the watch-type analysis device is brought into contact with the skin. In this case, when the infrared analysis is performed by bringing the analysis device into contact with skin, for example, the infrared analysis can be performed at the position of the skin where the highest signal intensity is obtained, or at the position of the blood vessel where a signal of the blood vessel is easily obtained. Therefore, at the time of a blood diagnosis, for example, the measurement can be performed on the blood vessel without positioning a measuring site on the location of the blood vessel become some of the multiwavelength arrayed light sources are positioned above the blood vessel by aligning a large number of the multiwavelength light source arrays on the back side of the watch-type device. Thus, a large number of light sources can be aligned on a chip by using the nanocarbon light sources, and therefore a specific infrared analysis can be performed at various locations.

As described above, infrared spectroscopic analysis information at various locations can be obtained at once, the analysis using the position dependency can be performed, or a differential infrared analysis spectrum of the analysis results at various position can be obtained, which leads to an analysis of high accuracy. In addition, it is possible to perform analytical imaging at various positions, such as on skin or the like. Further, as the correlation between the peaks of the infrared analysis spectra at the various locations can be examined, it is possible to examine the correlation between the intensities of the infrared absorption peaks, as well as the positional dependency or time-dependency. Therefore, it is possible to measure the correlation with the position or the correlation with time with high accuracy.

A highly sensitive analysis with reflection light or scattered light can be achieved using the nanocarbon light sources. Such measurement is a technique unique to nanocarbon infrared light sources that can be arranged into an array, which cannot be realized by a conventional infrared light source, such as a halogen lamp, or a large-size and monochromic laser light source. In addition, an ultra-small spectroscopic chip or spectroscopic device can be provided by using only one detector, without a spectrometer, such as a Michelson interferometer or a diffraction grating, which is required in a general infrared analysis. A small analysis chip technology, such as an analysis chip or the like, or a novel technique, such as a spectroscopic imaging apparatus or the like, can be realized.

### <Fifth embodiment>

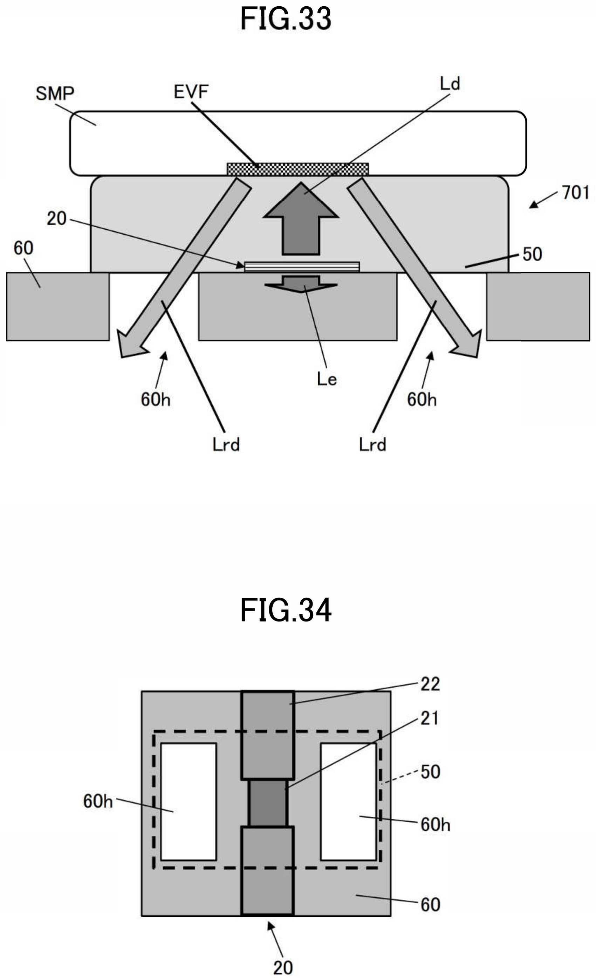

Fig. 33 illustrates an example of a contact-type reflection or scattering infrared analysis apparatus using a nanocarbon light source for various measurement samples including skin and blood vessels. Fig. 33 is a schematic view of an infrared analysis apparatus 701, which is an example of the infrared analysis apparatus of the fifth embodiment. The fifth embodiment describes an example in which a nanocarbon light source 20 is formed on a "substrate or the like that absorbs infrared rays having wavelengths to be analyzed," for example, a substrate 60. This is merely an example. As the "substrate or the like that absorbs infrared rays having wavelengths to be analyzed," for example, a substrate that absorbs wavelengths to be analyzed, such as any inorganic substrate of quartz, silicon oxide, glass, sapphire, a semiconductor, an insulator, a metal, or the like, or an organic substrate of a polymer resin or the like may be used. In addition, a substrate that transmits wavelengths to be measured, but is provided with a light-shielding layer, such as a film absorbing wavelengths to be analyzed or the like, may be used. The light-shielding layer is disposed on the surface of the substrate or the like, and is a light-shielding layer, such as CaF₂, BaF₂, Ge, Si, KBr, KSR-5, NaCl, ZnSe, ZnS, CsI, SiO₂, Al₂O₃, or the like.

Further, a transparent layer 50 can be formed on the nanocarbon light source 20 on the substrate 60. The transparent layer 50 is formed of a high refractive index transparent material that has a high refractive index and transmits infrared rays to be analyzed, such as Ge, diamond, Si, CaF₂, or the like. Moreover, an opening 60h, which is a hole or space in the substrate 60, is formed in the substrate 60 in order to pass through light Lrd that is scattered light or reflection light from the evanescent field EVF generated at the surface of the transparent layer 50 formed of the high refractive index transparent material. Use of the high refractive index transparent material is effective for facilitating generation of the evanescent field, but reflection light or scattered light from the measurement sample can be emitted backward without using the high refractive index transparent material. Therefore, a configuration that does not use the high refractive index transparent material is also included in the present invention. In the case where the refractive index of the sample to be in contact is high, the sample itself acts as a high-refractive transparent material, and therefore the same effect can be obtained.

In the case where a measurement sample SMP to be measured is brought into contact with the above device, strong infrared absorption occurs in the measurement sample SMP owing to the evanescent field EVF generated at the surface of the transparent layer 50 formed of the high refractive index material. This light is scattered or reflected by the measurement sample SMP, and is released backward. The released light Lrd, which is scattered light or reflection light, passes through the opening 60h, which is a hole or space, formed in the substrate 60, and is released toward the rear of the substrate 60. Then, the released light, which is omitted in the drawing, is applied onto a light-receiving optical system or light-receiving element, such as a detector or a combination of a spectrometer and a detector disposed further down from the substrate, to perform a detection or analysis. Since the light Lrd that is the infrared rays can be extracted the backward via the opening 60h that is a space or hole, the light can be highly efficiently extracted toward the back side without causing absorption or scattering at the substrate 60. Thus, for example, a highly sensitive infrared analysis can be performed. In Fig. 33, this mechanism is illustrated as the device including the transparent layer using the high refractive index transparent material, but light can be extracted to the back side as long as an opening that is a space or hole, is provided even without the transparent layer using the high refractive index transparent material. Thus, the transparent layer using the high refractive index transparent material is not necessary. Since the evanescent field is effective for an infrared analysis with high sensitivity, the high refractive index transparent material is illustrated as an example, but there is no problem if the high refractive index transparent material is not used. In Fig. 33, the hole or space is provided for releasing the light backward, but the hole or space can be replaced with a transparent material, such as a window material, that can transmit wavelengths to be analyzed, as long as the released light can be extracted to the back side.

As the characteristics of the present method, since the substrate 60 is provided with a function of "absorbing light having wavelengths to be analyzed," the substrate 60 itself acts as a filter without using an optical filter having a special shape or a shielding layer for back light. Thus, the substrate 60 can cut the light released directly from the light emitting element toward the back side, which allows observation of only reflection light or scattered light from the measurement sample SMP, leading to an infrared analysis with high sensitivity. In addition, a significant characteristic of the above method is that, since the evanescent field EVF is utilized, a contact-type infrared analysis or sensing of the measurement sample SMP can be performed, and therefore an infrared analysis or sensing of a contact site can be performed only by bringing the apparatus into contact with, for example, the skin of an organism or human body. In addition, the evanescent field EVF can be utilized by using the high refractive index material.

Further, in such infrared analysis, only a LED of a semiconductor light source has been conventionally used, and it has not been able to use an infrared light source that emits mid-infrared rays and has a wide range of emission wavelengths. In the case where the attempt is made to apply the above principle using a conventional mid-infrared light source, it is necessary to use a thermal light source, such as a halogen lamp or the like, and the halogen lamp needs to be vacuum-sealed by a glass tube or the like. Thus, the configuration illustrated in the drawing, in which the light-emitting element is directly bonded to the high refractive index transparent material, or the light sources are integrated on a flat structure, such as a planar substrate, cannot be achieved.

A characteristic of the infrared analysis apparatus of the present disclosure is a method unique to a nanocarbon light source, which can be formed on a substrate in a planar shape, and can be easily formed on various types of substrates. Since the nanocarbon light sources can be integrated on a flat substrate, the infrared analysis apparatus can be, for example, mounted in any device, such as a smart watch, a wearable device, a smartphone, a handy device, or the like. Therefore, a very small infrared sensing or analysis device can be provided by bringing the device into contact with, for example, skin, a blood vessel, or sweat of an organism or human body, or other surfaces of the human body. For example, the infrared analysis apparatus can be utilized for a health care device in the form of a wearable device. Therefore, the infrared analysis apparatus can be applied for an analysis of glucose, cholesterol, hormones, tumor markers, enzymes, or chemical substances used for health check-ups or disease examinations with the blood, skin, interstitial fluids, breath, or the like, for example, such as analyses of AST(GOT), ALT(GPT), γ-GT, ALP, ChE, LDH, total protein, albumin, A/G ratios, total bilirubin, HBs antigens, HBs antibodies, HCV antibodies, total cholesterol, triglyceride, HDL-C, LDL-C, nonHDL-C, blood glucose, HbAlc (N), uric acid (UA), C-reactive protein, urea nitrogen (BUN), creatine, e-GFR, amylase, white blood cell counts (WBC), red blood cell counts (RBC), hemoglobin levels, hematocrit, MCV, MCH, MCHC, platelet count, AFP quantification, CEA, prostatic PSA, CA125, CA15-3, elastase, CYFRA, CA19-9, genes, proteins, lactic acid, and the like. Since the measurement of hemoglobin, infection markers (CRP or syphilis), arginase I, phosphoethanolamine (PEA), blood tryptophan, CRP (blood protein), melanin, or glucose can be performed, for example, a wearable device for measuring a blood sugar level can be provided, which can be used as a continuous monitoring device for diabetes.

Each of Figs. 34 to 36 illustrates an configuration example of the above-described back light extraction machanism obtained by forming the transparent layer 50 formed of the high refractive index transparent material and the opening 60h, which is a hole or space, formed in the substrate 60.

As illustrated in Fig. 34, a configuration in which the opening 60h, which is a through hole, formed in the substrate 60 by etching or the like, can be used. In this case, the nanocarbon light source 20 is formed immediately adjacent to the opening 60h that is the through hole. In other words, the nanocarbon light source 20 is disposed in the vicinity of the opening 60h that is the through hole.

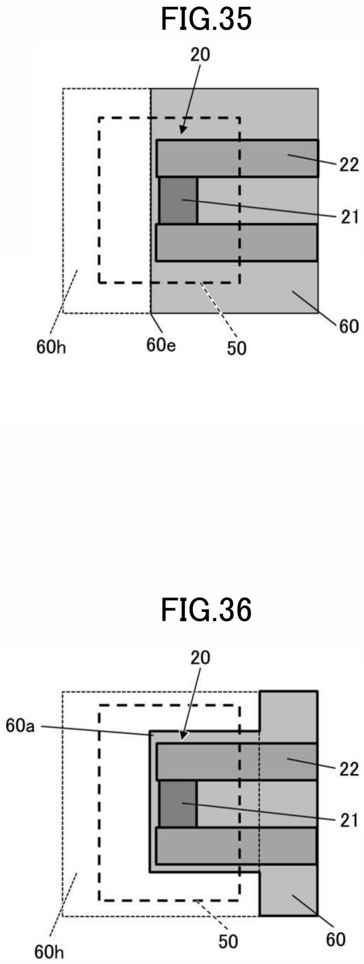

Further, the same effect can be obtained by forming the nanocarbon light source 20 in the vicinity of the end face 60e of the substrate 60 as illustrated in Fig. 35. In this case, approximately a half of the light emitted to the back side is absorbed by the substrate, but the other half is efficiently extracted. Therefore, the extracted light can be sufficiently used for an infrared analysis or sensing.

Moreover, Fig. 36 illustrates an example of a configuration in which the periphery of the nanocarbon light source is surrounded by the opening 60h, which is a space or hole, in the three directions to extract light at high efficiency. In Fig. 36, the substrate 60 includes a projection 60a having the periphery surrounded by the opening 60h in the three directions.

Each of Figs. 34 to 36 illustrates merely an example, and any configuration or shape may be used, as long as it is a mechanism that is provided with the opening 60h, which is a hole or space, and has a light source formed in the vicinity of the opening 60h. The same effect can be obtained regardless of a three-dimensional positional relationship of the hole and the light source, as long as the mechanism is the same, and therefore such configuration is also included in the present invention.

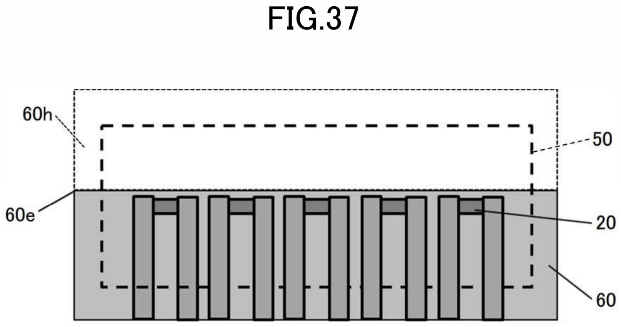

Fig. 37 illustrates an example in which the nanocarbon light sources are formed into an array at the end face of a hole or space in the above-described mechanism using the hole or space. In Fig. 37, the nanocarbon light sources are one-dimensionally aligned in the lateral direction, but the nanocarbon light sources may be an array in which the nanocarbon light sources are two-dimensionally aligned. In this array structure, the array may be an array of the same elements. However, the arrayed light source or multi-pixel technology illustrated in Figs. 1 to 32 described above can be used as it is in this example, and the functions of Figs. 1 to 32 of the present invention can be imparted in combination by the multiwavelength or multi-pixel nanocarbon light sources that change emission wavelengths or emission position. Therefore, this method can be applied for spectrum measurement without a spectrometer or for imaging performed by position-dependent infrared sensing.

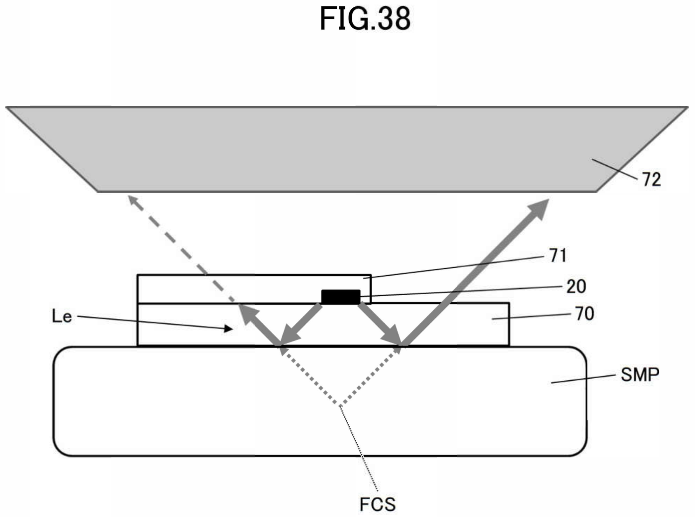

Fig. 38 illustrates an example of an optical system in which a lens is used in the above-described mechanism using a hole or space. The illustrated example is an example in which a nanocarbon light source is at an end face of a substrate. This is merely an example, and infrared sensing or analysis can be performed without using this optical system. In Fig. 38, the light emitted from the nanocarbon light source 20 toward the sample passes through the high refractive index substrate 70, and is reflected or scattered back while generating the evanescent field at the surface of the high refractive index substrate 70. In this case, the light can be efficiently extracted to a lens 72 when a focal point of the lens 72, which is an objective lens, is adjusted to a position that is approximately symmetric to the nanocarbon light source 20 with respect to the surface of the high refractive index substrate 70. However, the light is extracted through the high refractive index substrate 70, which causes refraction, and therefore the focal point is not strictly in the symmetric position to the nanocarbon light source 20. Therefore, the light may be most efficiently extracted when the focal point FCS may be adjusted to the position that is sifted toward the high refractive index substrate 70 side relative to the symmetric position to the nanocarbon light source 20. By shifting the focal point FCS to the position toward the high refractive index substrate 70 side relative to the symmetric position to the nanocarbon light source 20, the light may be efficiently extracted. In addition, the light may be efficiently extracted also when the focal point is adjusted to the boundary between the high refractive index substrate and the sample. As described above, where the focal point is adjusted for efficiently extracting the light can be designed by the design of the device. In Fig. 38, the nanocarbon light source 20 is provided on the substrate 71 that absorbs infrared rays having wavelengths to be analyzed. The light passing through the substrate 71 cannot be extracted by the lens 72 due to absorption by the substrate 71, whereas the light emitted in the direction where the substrate 71 is not present is not absorbed by the substrate 71 and therefore the whole light emitted in the direction where the substrate 71 is not present can be extracted. Further, the light emitted directly from the nanocarbon light source 20 in the back direction is absorbed by the substrate 71 and is not emitted in the direction of the lens 72, which is not detected at all. Thus, only the reflection light or scattered light from the measurement sample SMP can be observed via the lens 72.

This optical system is merely an example using a lens, and light can be extracted by another optical system. This is merely one example because a lens is not necessary if light reaches a detector or spectrometer without a lens. In particular, if a detector has a size or structure that can sufficiently receive back light, it is not necessary to use a lens, and all the light emitted toward the back side can be detected by the detector. Thus, one of characteristics of the present technology is that the detection is performed by simply arranging the detector without such optical design.

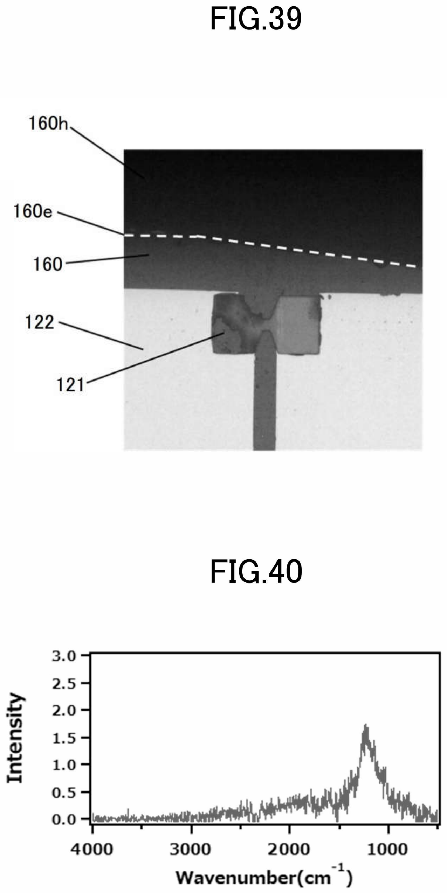

Fig. 39 illustrates an example of an optical microscopic photograph of the actually produced element. The photograph of Fig. 39 depicts an example in which a quartz substrate that absorbs mid-infrared light having the wavenumber of 2000 cm⁻¹ or less to be used in an analysis. The same configuration can be created with sapphire or silicon. A mid-infrared light source of graphene is formed at the end face 160e of the substrate 160. The reference numeral 121 denotes a light-emitting layer formed of graphene, and the reference numeral 122 denotes an electrode. In the photograph, a clear space (opening 160h) is provided above the end face 160e of the substrate 160, and reflection light or scattered light from the surface of the high refractive index substrate can be extracted through this space. In addition, the mid-infrared light is acquired through this space (opening 160h) and is subjected to spectroscopy using a spectrometer, thereby obtaining a mid-infrared reflection spectrum, or an infrared absorption spectrum (an attenuated total reflection (ATR) spectrum) with the evanescent field generated in the sample below the mid-infrared light source. Since the light emitted directly from the light source toward the back side is absorbed by the quartz substrate, in this case, the "direct light from the light source," which has the wavenumber of 2000 cm⁻¹ or less is cut, the direct light from the light source does not affect an infrared analysis or infrared sensing, which is a significant characteristics of the present embodiment.

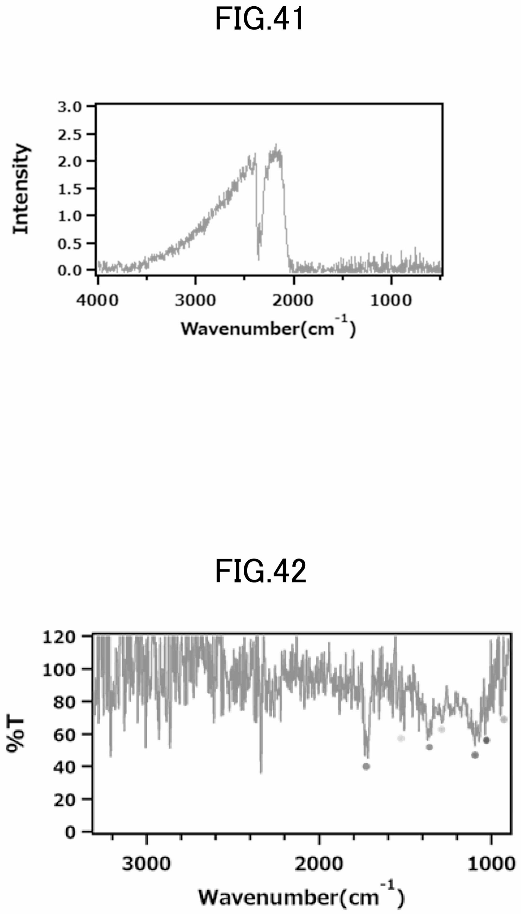

Figs. 40 and 41 illustrate the results of the infrared spectrum actually measured on the element of the optical microscopic photograph of Fig. 39. For the measurement, the measurement was performed using a lens, and therefore the measurement was performed using an optical system which could change a measuring site by changing the position of a focal point. Fig. 41 is an emission spectrum of infrared light directly emitted from the nanocarbon light source in the back direction. In this measurement, only direct light from the light source was measured because the focal point of the lens was adjusted to the graphene light source. It could be observed that, since the direct light was measured via the substrate, the mid-infrared light having the wavenumber of 2000 cm⁻¹ or less was cut. Since the "direct light from the light source" which had the wavenumber of 2000 cm⁻¹ or less was cut by the substrate, it was demonstrated that the analysis was performed without affecting the infrared analysis or infrared sensing at the wavenumber of 2000 cm⁻¹ or less, even when the measurement was performed without a lens. In the case where a lens is used, the direct light from the graphene light source can be avoided from being optically detected, unless the focal point is adjusted to the nanocarbon light source. Therefore, it is additionally noted that an infrared analysis with the evanescent field generated at the sample can be performed without using a substrate that cuts infrared light.

Fig. 40 depicts the result obtained by measuring the reflection light from the evanescent field by adjusting the focal point to the position illustrated in Fig. 38. As described above, the reflection light from the evanescent field could be measured at the position that is several hundreds of micrometers from the nanocarbon light source 20 that is the graphene light source (the position of 400 to 600 µm in this measurement, but the numerical value of the position may significantly differ depending on a thickness of the substrate 60, a type of the high refractive index substrate 70, or the optical system for use). In this measurement, the light from the evanescent field was extracted from the space where the substrate was not present. Fig. 40 depicts the result when the focal position is shifted by approximately 400 µm. With reference to the reflection spectrum of Fig. 40, the reflection light from the evanescent field, which had the wavenumber of 3000 cm⁻¹ to 500 cm⁻¹, could be successfully extracted in this experiment. It should be noted that the light at 2000 cm⁻¹ was cut and could not be extracted from the light transmitted through the substrate depicted in Fig. 41, but the light having the wavenumber of 2000 cm⁻¹ or less was extracted through the space in the measurement with the evanescent field depicted in Fig. 40. In this case, an infrared analysis, such as an infrared absorption spectrum at 2000 cm⁻¹ or less or the like, can be performed.

Fig. 42 is a diagram for explaining the result obtained by measuring a photoresist polymer using the nanocarbon light source of the present embodiment. Fig. 42 depicts the result obtained by measuring the photoresist polymer, which is arranged as the measurement sample SMP of Fig. 38 in the device of Fig. 39 in the same method as Fig. 40. As depicted in Fig. 42, the downwardly projected absorption peaks were observed corresponding to the infrared absorption by the functional group of the polymer molecule.

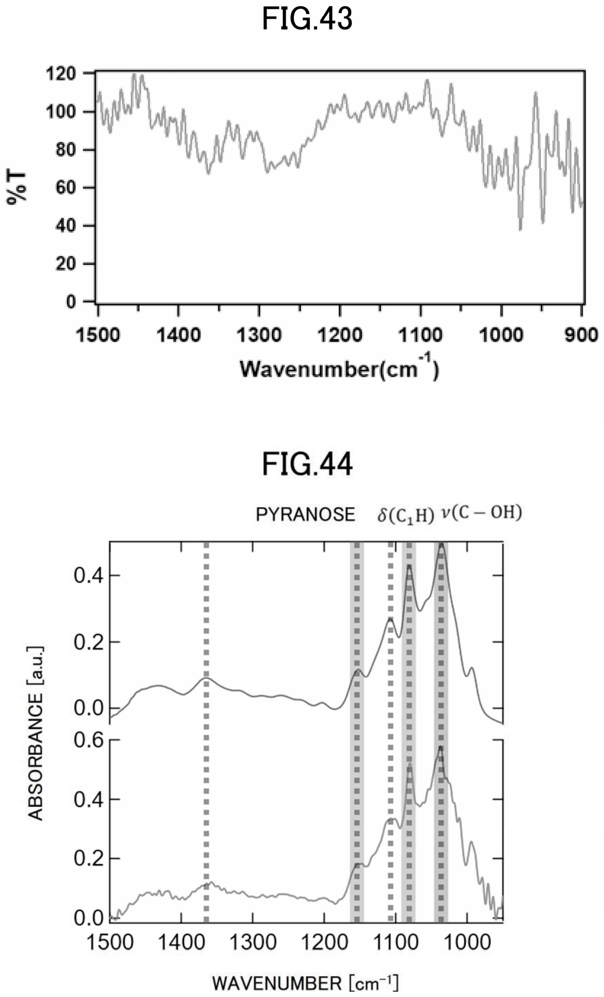

Fig. 43 is a diagram for explaining the result obtained by measuring glucose using the nanocarbon light source of the present embodiment. Fig. 43 depicts the result obtained by measuring the glucose, which is arranged as the measurement sample SMP of Fig. 38 in the device of Fig. 39 in the same method as Fig. 40. As depicted in Fig. 43, infrared absorption of the glucose was observed. It was demonstrated from the result depicted in Fig. 43 that the contact-type glucose measurement was successfully performed, which could be applied for a contact-type sugar level measurement or the like.

Fig. 44 depicts an example in which an infrared analysis and quantitative measurement of glucose can be performed using the nanocarbon light source. The upper part of Fig. 44 depicts an infrared analysis spectrum obtained by a conventional FTIR device. The lower part of Fig. 44 depicts an infrared analysis spectrum obtained using the nanocarbon light source of the present embodiment. The results depicted in Fig. 44 demonstrated that, similarly to the infrared analysis performed by a conventional FTIR device, an infrared analysis of glucose could be performed by the nanocarbon light source of the present embodiment. In this measurement, the analysis was performed using one light source in the setup of Fig. 10. However, the same effect can be obtained by any method of the present invention.

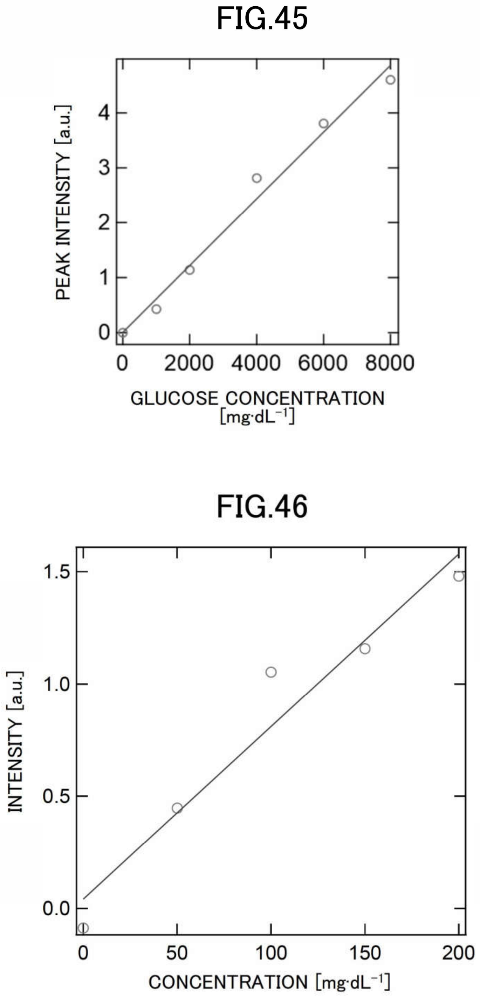

Fig. 45 depicts a calibration curve of a glucose concentration at a high concentration (0 to 8000 mg/dL) with respect to the peak intensity of the infrared spectrum using the nanocarbon light source. As depicted in Fig. 45, the relationship between the peak intensity of the infrared spectrum using the nanocarbon light source and the glucose concentration forms a linear shape, and therefore there is a correlation between the peak intensity of the infrared spectrum using the nanocarbon light source and the glucose concentration. Accordingly, the result depicted in Fig. 45 demonstrates that the glucose concentration can be measured by the infrared analysis using the nanocarbon light source.

Fig. 46 depicts the result of the glucose measurement at a low concentration. The result depicted in Fig. 46 demonstrates that the quantitative measurement of the glucose can be performed even at a low concentration of 0 to 100 mg/dL based on the infrared spectrum using the nanocarbon light source.

The results depicted in Figs. 44 to 46 demonstrate that the quantitative sensing of the glucose concentration in the solution can be performed using the nanocarbon light source. The measurement of the glucose concentration is used for measurement of a blood sugar level in the blood or interstitial fluid at the skin, and the results demonstrate that the blood sugar level measurement can be performed using the nanocarbon light source. Since the blood sugar level measurement can be used for monitoring a blood sugar level for diabetes, and therefore it can be also used for monitoring a blood sugar level of a healthy individual as well as monitoring a blood sugar level for diabetes.

As described above, the infrared analysis using the nanocarbon light source can be used for, for example, skin-contact-type blood sugar level monitoring because the infrared analysis using the nanocarbon light source enables a contact-type infrared analysis, quantitative analysis, or sensing. The present technology can be applied for, not only the blood sugar level measurement, but also an analysis of glucose, cholesterol, hormones, tumor markers, enzymes, or chemical substances used for health check-ups or disease examinations with the blood, skin, interstitial fluids, breath, or the like, for example, such as analyses of AST(GOT), ALT(GPT), γ-GT, ALP, ChE, LDH, total protein, albumin, A/G ratios, total bilirubin, HBs antigens, HBs antibodies, HCV antibodies, total cholesterol, triglyceride, HDL-C, LDL-C, nonHDL-C, blood glucose, HbAlc(N), uric acid (UA), C-reactive protein, urea nitrogen (BUN), creatine, e-GFR, amylase, white blood cell counts (WBC), red blood cell counts (RBC), hemoglobin levels, hematocrit, MCV, MCH, MCHC, platelet count, AFP quantification, CEA, prostatic PSA, CA125, CA15-3, elastase, CYFRA, CA19-9, genes, proteins, lactic acid, and the like.

### <Device configuration of nanocarbon light source>

The nanocarbon light source formed of carbon nanotubes or graphene is a device that emits infrared light when an electric current is applied to the nanocarbon light source to energize and heat the nanocarbon light source. In general, a nano carbon having the planar structure in a square shape or the like is arranged on a substrate, and electrodes coupled to the nanocarbon are formed. In general, the nanocarbon can be in any shape, such as a square shape or a bow-tie shape, without any problem. In the present invention, any shape of the nanocarbon is widely used without any limitation. In the case of the planar structure, the electric current may be dispersed to cause bypass of the electric current depending on the quality of the produced light emitting element or the like, because the light emitting element has a flat and large light-emitting surface, and therefore it may be difficult to achieve high luminance or uniform light emission.

Therefore, a configuration in which a nanocarbon light source is formed in a thin linear shape to allow an electric current to flow in a concentrated manner is conceivable. In the thin linear (thin line-shaped) nanocarbon light source, dispersion of the electric current is inhibited, and high luminance and uniform light emission can be achieved. In addition, since the quality of the nanocarbon can be improved by forming into a thin line shape, the uniformity or yield of the light source production can be improved. There are two methods for achieving the thin linear shape.

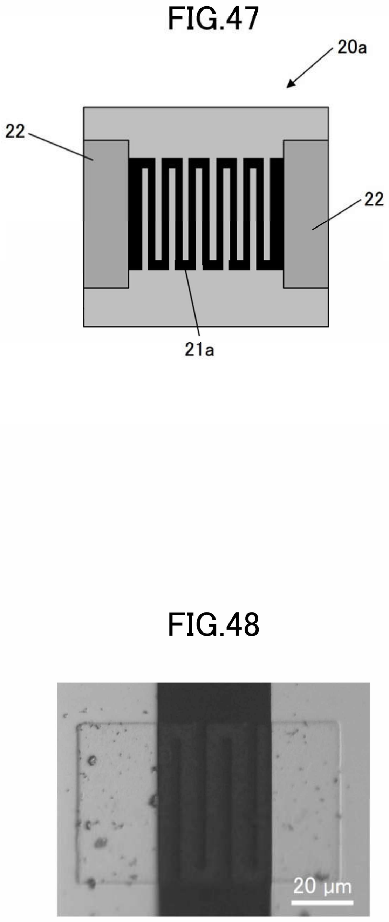

As a first method, a light source is formed by bending a line of a single nanocarbon, which is called a meander structure. Fig. 47 is a view illustrating a nanocarbon light source 20a including a light-emitting layer 21a having the meander structure. The nanocarbon light source 20a includes the light-emitting layer 21a and electrodes 22. The light-emitting layer 21a has the meander structure formed by bending a line of a single nanocarbon. The nanocarbon light source 20a illustrated in Fig. 47 can inhibit dispersion of an electric current, as the electric current is concentrated into a single line. At the same time, since the quality of nanocarbon can be improved, the nanocarbon light source 20a illustrated in Fig. 47 can achieve high luminance and uniform light emission.

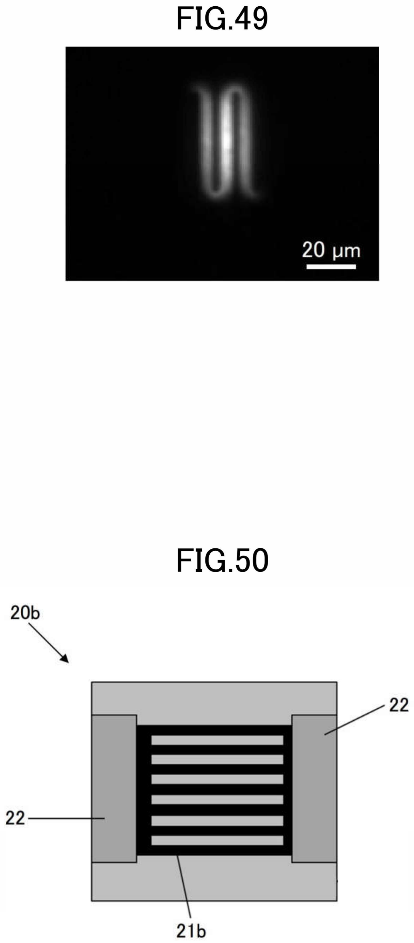

The photograph of the nanocarbon light source including the light-emitting layer having the meander structure is depicted in Fig. 48. Further, the result of the light emission of the nanocarbon light source illustrated in Fig. 48 by applying the power is depicted in Fig. 49. As depicted in Fig. 49, light emission can be concentrated in a single line using the nanocarbon light source including the light-emitting layer having the meander structure.

As a second method, a light emitting element that has a stripe structure, in which nanocarbon is formed in a stripe shape with thin lines in the direction of an electric current to be applied, and emits light as the electric current is applied along a large number of stripe lines. Fig. 50 is a view illustrating a nanocarbon light source 20b having the stripe structure. The nanocarbon light source 20b includes a light-emitting layer 21b and electrodes 22. The light-emitting layer 21b has the stripe structure in which a stripe shape is formed with thin lines in the electric current direction. The nanocarbon light source 20b illustrated in Fig. 50 can inhibit dispersion of an electric current as the electric current is concentrated in a single line. At the same time, since the quality of nanocarbon can be improved, the nanocarbon light source 20b illustrated in Fig. 50 can achieve high luminance and uniform light emission.

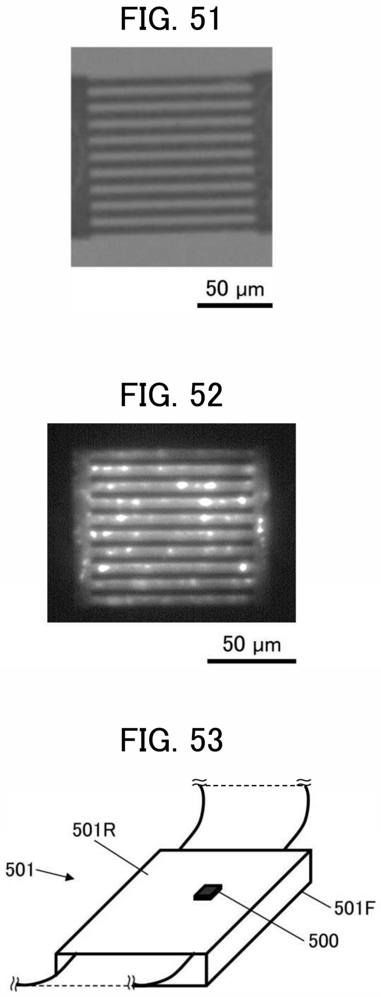

The photograph of the nanocarbon light source including the light-emitting layer having the stripe structure is depicted in Fig. 51. Further, the result of the light emission of the nanocarbon light source illustrated in Fig. 51 by applying the power is depicted in Fig. 52. As depicted in Fig. 52, light emission can be concentrated in a single line using the nanocarbon light source including the light-emitting layer having the stripe structure.

Both the meander-shaped nanocarbon light sources and the stripe-shaped nanocarbon light sources can be arranged into an array on a substrate, and emission of various colors can be achieved by combining with a filter or a resonator.

### <Device using nanocarbon light source>

A device using the nanocarbon light source of the present embodiment, in particular, an example of a wearable device, will be described.

Figs. 53 to 59 illustrate examples of a wearable device on which the nanocarbon light source of the present embodiment is mounted. An application of the wearable device using the nanocarbon light source of the present embodiment for various health cares is particularly expected. In Figs. 53 to 59, the reference numeral 500 denotes a nanocarbon light source device using the nanocarbon light source.

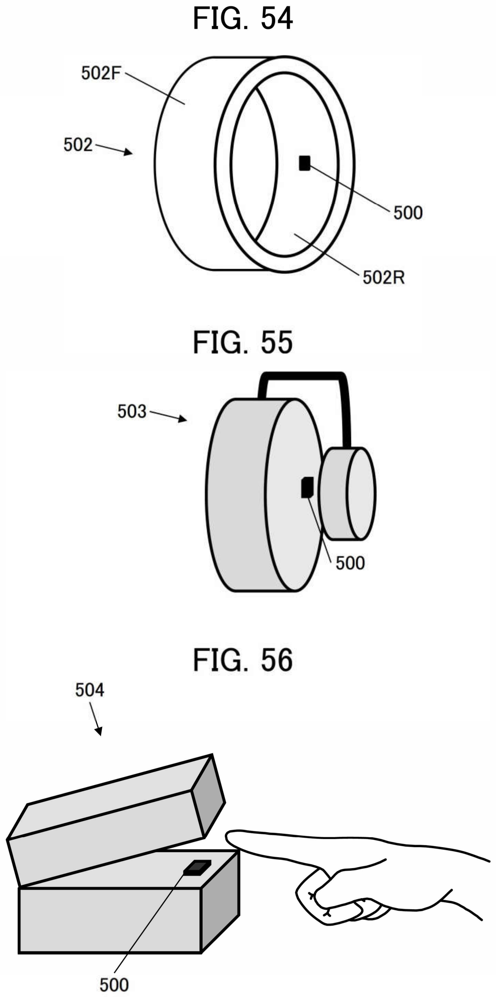

Fig. 53 illustrates a belt-mounted type wearable device 501. The wearable device 501 is, for example, a wristwatch-type, an upper arm belt-type, or an abdominal belt-type wearable device. The wearable device 501 includes a nanocarbon light source device 500 on a back surface 501R that is on the opposite side to an outer side surface 501F. Fig. 54 illustrates a ring-type wearable device 502. The wearable device 502 includes the nanocarbon light source device 500 on a back surface 502R that is on the opposite side to an outer side surface 502F of the ring. Fig. 55 illustrates an earring-type wearable device 503. Fig. 56 illustrates a finger-tip clip type wearable device 504. Although the watch-type wearable device is illustrated as the wearable device, the watch-type wearable device does not need to include a timepiece function or a display, and simply encompasses that the watch-type wearable device is a device worn on a wrist.

Each of the wearable device 501, the wearable device 502, the wearable device 503, and the wearable device 504 performs measurement at a site where the wearable device is attached. When each of the wearable device 501, the wearable device 502, the wearable device 503, and the wearable device 504 is worn on the body, the nanocarbon light source device is arranged on the body side.

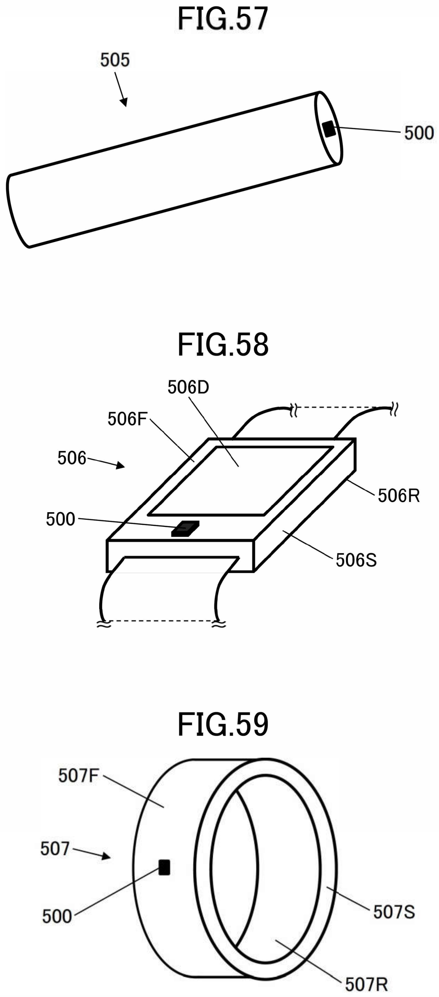

Further, Fig. 57 illustrates a stick-type device 505. The device 505 includes a nanocarbon light source device mounted on the surface side of the handy stick, and measurement can be performed by bringing the nanocarbon light source device into direct contact with a site of the human body to be measured.

The device 505 illustrated in Fig. 57 can be used by bringing the device 505 into contact with various parts of the human body, such as an ear, a lip, an ear, a nose, an eyelid, a finger, an arm, abdomen, a foot, a face, a torso, a leg, or the like. In addition, each of the wearable devices illustrated in Figs. 53 to 56 and the device 505 illustrated in Fig. 57 can be used for measuring breath. This method allows the device to be used in contact with any site of the human body, such as a lip, a nose, an eyelid, or abdomen, which is particularly difficult with a sensor disposed on the inner side, such as a watch-type or ring-type wearable device. Therefore, this is a different method of use from the use of a conventional watch-type or ring-type wearable device. For example, a sensor is disposed on the outer side of a watch-type wearable device 506 illustrated in Fig. 58 or a ring-type wearable device 507 illustrated in Fig. 59, and the sensor is brought into a part of the body, such as a lip or the like so that measurement is easily performed "any time." Fig. 57 illustrates the stick-type wearable device, but the wearable device is not limited to a stick shape and may have any shape, as long as the wearable device can be in contact with a part of the body. Further, the device may not be always worn as the wearable device, and may be brought into contact with a part of the body when measurement is desired.

The watch-type wearable device 506 illustrated in Fig. 58 includes the nanocarbon light source device 500 on a surface 506F on which a display part 506D, such as a display or the like, is provided. The wearable device 506 may include the nanocarbon light source device 500 on the side surface 506S. Further, the wearable device 506 may include the nanocarbon light source device 500 also on a back surface 506R. Since the nanocarbon light source is disposed on the front side, the wearable device can be used by being in contact with any site of the body, as with the above-described stick-type device. Therefore, general problems associated with wearable devices, such as measurement errors, mistakes in measurement, reduction in measurement sensitivity, or the like due to the movement of the wearable device when the wearable device is worn can be reduced, and measurement can be highly accurately and stably performed with high sensitivity by bringing the wearable device into secure contact with the measuring site of the body. Although the watch-type wearable device is illustrated as the wearable device, the watch-type wearable device does not need to include a timepiece function or a display, and simply encompasses that the watch-type wearable device is a device worn on a wrist.

The ring-type wearable device 507 illustrated in fig. 59 includes the nanocarbon light source device 500 on a surface 507F. The wearable device 507 may include the nanocarbon light source device 500 on a side surface 507S. Further, the wearable device 507 may include the nanocarbon light source device 500 also on a back surface 507R. Since the nanocarbon light source is disposed on the front side, the wearable device can be used by bringing the nanocarbon light source in contact with any site of the body, as with the above-described stick-type device. Therefore, general problems associated with wearable devices, such as measurement errors, mistakes in measurement, reduction in measurement sensitivity, or the like due to the movement of the wearable device when the wearable device is worn can be reduced, and measurement can be highly accurately and stably performed with high sensitivity by bringing the wearable device into secure contact with the measuring site of the body.

When each of the wearable device 507 and the wearable device 508 is worn on the body, the nanocarbon light source device is arranged on the outer side of the body.

Further, there are highly sensitive sites for each disease, for example, sites with a large blood flow, such as lips, ears, or the like. Therefore, a health monitor, a marker, or a disease marker can be measured with high sensitivity by pressing the wearable device against such highly sensitive sites. By attaching a sensor to the outside of an article that is always worn, an accessory watch, or a ring-type device, the sensor can be pressed against any desired site of the human body at any time, and therefore the sensor can be pressed against the highly sensitive measurement site of the human body as needed, while saving a trouble of carrying a measurement instrument. Thus, for example, the ring-type wearable device has a characteristic that measurement is performed on a highly sensitive site while being worn continuously on a finger as a ring. The same can be applied for the watch-type device or any other wearable devices. By attaching a sensor to the "outer side that is not the human body side" of an accessory or device that is always worn on the human body, the sensitivity and application of a health monitor, a marker, or a disease marker are enhanced or expanded. Certainly, sensors can be attached to both the inner side and the outer side of the wearable device.

Although the present invention has been described based on the embodiments, the present invention is not limited to the above-described embodiments, and various modifications can be made within the scope of the claims.

The present application claims priority based on Japanese Patent Application No. 2023-081417 filed on May 17, 2023, the entire contents of which are incorporated herein by reference.

### REFERENCE SIGNS LIST

1, 2, 3, 4: nanocarbon light source element
5, 6, 7, 8, 9: spectroscopic device
10: substrate
20, 20a, 20b: nanocarbon light source
21, 21a, 21b: light-emitting layer
22: electrode
30 wavelength selecting structure
40: light-shielding layer
50: transparent layer
60: substrate
70: high refractive index substrate
100, 101, 102: multiwavelength nanocarbon light source array
103: nanocarbon light source array
130, 230, 330, 430, 530, 630, 730, 830: resonator
200, 201, 202, 203, 204, 205, 206, 207: detector
301, 302, 303, 304: analysis chip
305, 306: infrared ray analysis chip
501, 502, 503, 504, 506, 507: wearable device
505: device
601, 602, 603, 604, 605, 606, 607, 608: analysis device
701: infrared analysis apparatus
801, 802: imaging apparatus
1000: light source
1010, 1020: lens

## Claims

1. A nanocarbon light source element, comprising:
a substrate;
a nanocarbon light source disposed on the substrate; and
a wavelength selecting structure that is provided to the nanocarbon light source and selects specific wavelengths,
wherein the nanocarbon light source element emits light having the specific wavelengths via the wavelength selecting structure.

2. The nanocarbon light source element according to claim 1,
wherein the wavelength selecting structure includes a resonator.

3. The nanocarbon light source element according to claim 2,
wherein the resonator includes two mirrors disposed on the nanocarbon light source.

4. The nanocarbon light source element according to claim 2,
wherein the resonator includes two mirrors disposed on an upper side and a lower side of the nanocarbon light source, respectively.

5. The nanocarbon light source element according to claim 3,
wherein the two mirrors of the resonator include an upper mirror disposed on the nanocarbon light source, and a lower mirror disposed on a surface of the substrate opposite to the nanocarbon light source.

6. The nanocarbon light source element according to claim 2,
wherein the resonator includes a movable mirror, and
a resonator length of the resonator can be changed by moving the movable mirror.

7. The nanocarbon light source element according to claim 6,
wherein the resonator includes the movable mirror that is disposed above the nanocarbon light source and a lower mirror disposed between the nanocarbon light source and the substrate.

8. The nanocarbon light source element according to claim 6,
wherein the resonator includes the movable mirror that is disposed above the nanocarbon light source and a lower mirror disposed on a surface of the substrate opposite to the nanocarbon light source.

9. The nanocarbon light source element according to claim 6,
wherein the resonator includes the movable mirror that is disposed above the nanocarbon light source and a lower mirror disposed on the nanocarbon light source.

10. The nanocarbon light source element according to claim 6,
wherein the resonator includes the movable mirror that is disposed below the nanocarbon light source and an upper mirror disposed above the nanocarbon light source.

11. The nanocarbon light source element according to claim 10,
wherein the upper mirror is disposed to set apart from the nanocarbon light source.

12. An infrared analysis apparatus, comprising:
a substrate;
a nanocarbon light source element including a nanocarbon light source disposed on the substrate; and
a detector that detects light emitted from the nanocarbon light source element.

13. The infrared analysis apparatus according to claim 12,
wherein the nanocarbon light source element includes a light-shielding layer formed on an opposite side of the substrate relative to the nanocarbon light source, and
the detector is disposed on the opposite side of the substrate relative to the nanocarbon light source.

14. The infrared analysis apparatus according to claim 13, comprising:
an arrayed nanocarbon light source that includes two or more of the nanocarbon light source elements.

15. The infrared analysis apparatus according to claim 14, comprising:
two or more of the arrayed nanocarbon light sources.

16. The infrared analysis apparatus according to claim 12,
wherein the infrared analysis apparatus monitors a blood sugar level using a detection result of the detector.

17. An infrared analysis apparatus, comprising:
the nanocarbon light source element according to claim 7; and
a detector that detects light emitted from the nanocarbon light source element,
wherein a measurement sample is set on an opposite side of the movable mirror relative to the nanocarbon light source element.

18. The infrared analysis apparatus according to claim 17,
wherein the detector detects transmission light transmitted through the measurement sample.

19. The infrared analysis apparatus according to claim 17,
wherein the detector detects reflection light or scattered light from the measurement sample.

20. An infrared analysis apparatus, comprising:
the nanocarbon light source element according to claim 7; and
a detector that detects light emitted from the nanocarbon light source element,
wherein a measurement sample is set between the nanocarbon light source and the movable mirror, and
the detector detects transmission light transmitted through the measurement sample.

21. The infrared analysis apparatus according to claim 20,
wherein the detector is movable and includes a reflection film that functions as the movable mirror.

22. The infrared analysis apparatus according to claim 12,
wherein the nanocarbon light source emits modulated light, and
the detector performs detection in synchronization with the modulated light.

23. A wearable device, comprising:
a nanocarbon light source element including a nanocarbon light source.

24. The wearable device according to claim 23,
wherein, when the wearable device is worn on a body, the nanocarbon light source element is arranged on a body side.

25. The wearable device according to claim 24,
wherein the wearable device measures at least one selected from the group consisting of skin, sweat, breath, and a blood vessel.

26. The wearable device according to claim 24,
wherein the wearable device is a belt-mounted type device, a ring type device, an earring type device, or a finger-tip clip type device.

27. The wearable device according to claim 24,
wherein, when the wearable device is worn on the body, the nanocarbon light source element is arranged on an outer side of the body.

28. The wearable device according to claim 27,
wherein the wearable device measures at least one selected from the group consisting of skin, sweat, breath, and a blood vessel.

29. The wearable device according to claim 27,
wherein the wearable device is a belt-mounted type device or a ring type device.

30. A device comprising:
a nanocarbon light source element including a nanocarbon light source,
wherein, when the device is used, the nanocarbon light source element is brought into contact with a body.

31. The device according to claim 30,
wherein the device measures at least one selected from the group consisting of skin, sweat, breath, and a blood vessel.

32. The device according to claim 30,
wherein the device has a stick shape.

33. A multiwavelength nanocarbon light source array, comprising:
a substrate;
nanocarbon light sources arranged into an array on the substrate; and
a wavelength selecting structure provided to each of the nanocarbon light sources, and selects different wavelengths,
wherein the multiwavelength nanocarbon light source array emits light having multiple wavelengths via the wavelength selecting structure.

34. The multiwavelength nanocarbon light source array according to claim 33,
wherein a wavelength can be switched by selecting a desired nanocarbon light source from the nanocarbon light sources.

35. The multiwavelength nanocarbon light source array according to claim 34,
wherein the wavelength selecting structure includes a resonator.

36. The multiwavelength nanocarbon light source array according to claim 35,
wherein the resonator includes a first mirror and a second mirror, and
either the first mirror or the second mirror is a mirror that is step-shaped.

37. The multiwavelength nanocarbon light source array according to claim 35,
wherein the resonator includes a first mirror and a second mirror, and
the first mirror is inclined with respect to the second mirror.

38. An infrared analysis apparatus, comprising:
the multiwavelength nanocarbon light source array according to any one of claims 33 to 37; and
a detector that detects light emitted from the multiwavelength nanocarbon light source array.

39. The infrared analysis apparatus according to claim 38,
wherein the detector detects transmission light transmitted through a measurement sample.

40. The infrared analysis apparatus according to claim 38,
wherein the detector detects reflection light or scattered light from a measurement sample.

41. The infrared analysis apparatus according to claim 38,
wherein a measurement sample is passed through a flow path, and
the detector detects transmission light transmitted through the measurement sample.

42. The infrared analysis apparatus according to claim 38,
wherein a measurement sample is passed through a flow path, and
the detector detects reflection light or scattered light from the measurement sample.

43. An infrared analysis apparatus, comprising:
a substrate;
a nanocarbon light source array including nanocarbon light sources arranged into an array on the substrate; and
a detector that detects light emitted from the nanocarbon light source array,
wherein a measurement sample is passed through a flow path,
the detector detects transmission light transmitted through the measurement sample,
the measurement sample is a sample that undergoes a mixing reaction when multiple liquids are mixed, and
the nanocarbon light sources are aligned along the flow path.

44. An infrared analysis apparatus, comprising:
a substrate;
a nanocarbon light source array including nanocarbon light sources arranged into an array in the substrate; and
a detector that detects light emitted from the nanocarbon light source array,
wherein a measurement sample is passed through a flow path,
the detector detects transmission light transmitted through the measurement sample,
the measurement sample is a sample that undergoes a photochemical reaction,
the measurement sample flows through the flow path in a state in which light for inducing the photochemical reaction is applied, and
the nanocarbon light sources are aligned along the flow path.

45. An infrared analysis apparatus, comprising:
a substrate;
a nanocarbon light source array including nanocarbon light sources arranged into an array on the substrate; and
a detector that detects light emitted from the nanocarbon light source array,
wherein a measurement sample is passed through a flow path,
the detector detects reflection light or scattered light from the measurement sample,
the measurement sample is a sample that undergoes a mixing reaction when two or more liquids are mixed, and
the nanocarbon light sources are aligned along the flow path.

46. An infrared analysis apparatus, comprising:
a substrate;
a nanocarbon light source array including nanocarbon light sources arranged into an array on the substrate; and
a detector that detects light emitted from the nanocarbon light source array,
wherein a measurement sample is passed through a flow path,
the detector detects reflection light or scattered light from the measurement sample,
the measurement sample is a sample that undergoes a photochemical reaction,
the measurement sample flows through the flow path in a state in which light for inducing the photochemical reaction is applied, and
the nanocarbon light sources are aligned along the flow path.

47. An imaging apparatus comprising:
the multiwavelength nanocarbon light source array according to any one of claims 33 to 37;
a lens; and
an image sensor.

48. A wearable device comprising:
the multiwavelength nanocarbon light source array according to any one of claims 33 to 37.

49. An infrared analysis apparatus, comprising:
a substrate;
a nanocarbon light source element including a nanocarbon light source disposed on the substrate; and
a detector that detects light emitted from the nanocarbon light source element,
wherein the detector is disposed on a surface of the substrate opposite to the nanocarbon light source,
a measurement sample is set on a side of the substrate where the nanocarbon light source is disposed, and
the detector detects reflection light or scattered light from the measurement sample.

50. The infrared analysis apparatus according to claim 49, further comprising:
a high refractive index layer disposed between the nanocarbon light source element and the measurement sample.

51. The infrared analysis apparatus according to claim 50,
wherein the substrate absorbs infrared rays having wavelengths to be analyzed, and
the substrate has a through hole through which the reflection light or the scattered light passes.

52. The infrared analysis apparatus according to claim 51,
wherein the through hole is provided in the vicinity of the nanocarbon light source.

53. The infrared analysis apparatus according to claim 50,
wherein the substrate absorbs infrared rays having wavelengths to be analyzed, and
the nanocarbon light source is disposed on an edge of the substrate.

54. The infrared analysis apparatus according to claim 50,
wherein the substrate absorbs infrared rays having wavelengths to be analyzed, and
the nanocarbon light source is disposed on a projected potion on an edge of the substrate.

55. The infrared analysis apparatus according to claim 50,
wherein the infrared analysis apparatus includes two or more of the nanocarbon light sources, and
two or more of the nanocarbon light sources are aligned along the edge of the substrate.

56. The infrared analysis apparatus according to claim 50, further comprising:
a lens that focuses the reflection light or the scattered light onto the detector,
wherein a focal point of the lens is adjusted to a position that is symmetric to the nanocarbon light source with respect to an interface between the high refractive index layer and the measurement sample, or in the vicinity of the position.

57. An infrared analysis apparatus, comprising:
a substrate;
a nanocarbon light source element including a nanocarbon light source disposed on the substrate; and
a detector that detects light emitted from the nanocarbon light source element,
wherein the detector is disposed on a side of the substrate where the nanocarbon light source is disposed,
a measurement sample is set on the side of the substrate where the nanocarbon light source is disposed, and
the detector detects reflection light or scattered light from the measurement sample.

58. A nanocarbon light source element, comprising:
a substrate;
a nanocarbon light source disposed on the substrate,
wherein the nanocarbon light source is a thin linear light source that is meander-shaped or stripe shaped.
